# EUROPÄISCHE PATENTSCHRIFT

(11) **EP 3 230 683 B1**
(45) Veröffentlichungstag und Bekanntmachung des Hinweises auf die Patenterteilung: **02.10.2019**
(21) Anmeldenummer: 15808196.8
(22) Anmeldetag: 11.12.2015
(51) Int. Cl.: G01B 5/012, G01B 11/00, G01B 11/245

(54) **KOORDINATENMESSGERÄT UND VERFAHREN ZUR MESSUNG VON MERKMALEN AN WERKSTÜCKEN**
COORDINATE MEASURING MACHINE AND METHODS FOR MEASURING FEATURES OF WORKPIECES
MACHINE DE MESURE DE COORDONNÉES ET PROCÉDÉS DE MESURE DE CARACTÉRISTIQUES SUR DES PIÈCES

(30) Priorität: 12.12.2014 DE 102014118525; 30.07.2015 DE 102015112521; 19.11.2015 DE 102015120060
(43) Veröffentlichungstag der Anmeldung: 18.10.2017
(60) Teilanmeldung: 19180224.8
(73) Patentinhaber: Werth Messtechnik GmbH, 35394 Giessen (DE)
(72) Erfinder: CHRISTOPH, Ralf, 35394 Gießen (DE); SCHMIDT, Ingomar, 99085 Erfurt (DE); WEGNER, Volker, 35460 Staufenberg (DE); ANDRÄS, Matthias, 61197 Florstadt (DE); NEUSCHAEFER-RUBE, Ulrich, 38116 Braunschweig (DE); ETTEMEYER, Andreas, 9472 Grabs (CH); DEMIREL, Mehmet, 6842 Koblach (AT); LINZ-DITTRICH, Sabine, 9487 Gamprin-Bendern (LI); HOPP, Benjamin, 35390 Giessen (DE)
(74) Vertreter: Stoffregen, Hans-Herbert
(86) Internationale Anmeldenummer: PCT/EP2015/079339
(87) Internationale Veröffentlichungsnummer: WO 2016/092053

(56) Entgegenhaltungen:
- EP-A2- 1 528 354
- DE-A1-102009 025 815
- DE-A1-102010 060 833
- US-A1- 2014 043 468

## Beschreibung

Die Erfindung bezieht sich auf ein Koordinatenmessgerät zur geometrischen Bestimmung von Merkmalen, insbesondere Oberflächenmesspunkten, an einem Werkstück, umfassend einen Bildverarbeitungssensor als ersten Sensor mit einem Bildverarbeitungsstrahlengang (erster Strahlengang), wobei der erste Strahlengang zumindest eine Frontoptik umfasst, welche dem zu messenden Werkstück zugewandt ist und als Asphäre ausgebildet ist und/oder einen chromatischen Längsfehler aufweist, und wobei auf der vom Werkstück abgewandten Seite der Frontoptik mindestens ein optischer Teiler, wie Teilerschicht, insbesondere wellenlängenselektiver Teiler, angeordnet ist, durch den ein zweiter Strahlengang mit dem Bildverarbeitungsstrahlengang gekoppelt und ein gemeinsamer Strahlengang gebildet wird, indem die Frontoptik aus Richtung des zu messenden Werkstücks durchlaufendes Licht zumindest teilweise aus dem gemeinsamen Strahlengang in den zweiten Strahlengang ausgekoppelt wird, wobei der zweite Strahlengang einem zweiten optischen Sensor als zweiten Sensor, insbesondere Abstandsensor, bevorzugt chromatischen Abstandsensor oder Abstandsensor nach dem Foucault-Prinzip, zugeordnet ist, wobei der Bildverarbeitungssensor und der zweite Sensor zur direkten Messung der Werkstückoberfläche und/oder zur Bestimmung der Auslenkung einer oder jeweils einer einem biegeelastischen Taststift zugeordneten Marke ausgebildet sind.

Auch ist ein Gegenstand der Erfindung ein Verfahren zur geometrischen Bestimmung von Merkmalen, insbesondere Oberflächenmesspunkten, an einem Werkstück.

Für die dimensionelle Messung komplexer Geometrien werden verschieden taktile, taktiloptische, optische oder computertomografische Sensoren verwendet. Bevorzugt werden diese in Koordinatenmessgeräten (KMGs) betrieben, teilweise auch mehrere Sensoren kombiniert in einem Gerät (Multisensor-KMG).

Insbesondere für die Messung von sogenannten Mikromerkmalen, also Merkmalen wie Löcher, Vertiefungen, Spalte usw. mit Abmessungen in zumindest einer Richtung, beispielsweise Lochdurchmesser oder Spaltbreite, von deutlich unterhalb einem Millimeter, werden Sensoren mit entsprechend kleinen Antastformelementen wie Kugeln, Scheiben, Spitzen usw. benötigt. Eine besondere Herausforderung besteht dann, wenn sehr weit in das Werkstück eingetaucht werden muss, die zu messenden Abschnitte sich im jeweils untersuchten Bereich bzw. Merkmale also bis weit unterhalb der direkt zugänglichen Oberfläche vorliegen.

Typische Vertreter solcher Mikromerkmale sind die Spritzlöcher an Einspritzdüsen, insbesondere Diesel-Einspritzdüsen für PKWs und LKWs oder an Benzin-Einspritzdüsen für PKWs. Die Herstellung der Spritzlöcher erfolgt zumeist mittels Electrical Discharging Machining (EDM), wie beispielsweise in der DE10360080A1 der Firma Bosch beschrieben, oder Laserbearbeitung wie Laserbohren. Anschließend erfolgt auch ein Härten, wie der EP2753821A1 der Firma Bosch zu entnehmen ist. Der Einlaufradius, also der Übergang zwischen Innenraum der Einspritzdüse (folgend auch als Kanal bezeichnet) und Spritzloch wird oft verrundet, beispielsweise mittels Schleifpaste, wodurch die Formabweichungen der Spritzlöcher verringert werden, oder hydro-erosives Verrunden, wie der WO2004004973A1 der Firma Siemens zu entnehmen ist.

Insbesondere die Spritzlöcher von Diesel-Einspritzdüsen sind nach innen hin konisch, also in ihrem Durchmesser zunehmend aufgebaut. Zur Beschreibung des Kegelwinkels wird der sogenannte Konizitätsfaktor (K-Faktor) verwendet, der meist in der Maßeinheit Anstieg des Durchmessers in 10 µm Schritten je 1 mm Länge angegeben wird. K=1 bedeutet demnach, dass der Radius nach innen hin je einem Millimeter Tiefe um 10 µm ansteigt. Typische Einspritzdüsen besitzen einen K-Faktor im Bereich von 0 bis 7, zum Beispiel K=5.

Abweichende Definitionen, die sich beispielsweise auf den Einlass- und den Auslass-Durchmesser des Spritzlochs beziehen, finden sich ebenso in der Literatur. Für Benzin-Einspritzdüsen kann ebenfalls ein K-Faktor angegeben werden, meist jedoch wird der Kegelwinkel bzw. halbe Kegelwinkel angegeben, da die Länge meist weniger als 1 mm beträgt und der K-Faktor unpraktisch ist. Benzin-Einspritzdüsen besitzen zumeist einen nach außen zunehmenden Durchmesser mit Kegelwinkeln von 3° bis 10°, typisch 5° und meist im Außenbereich eine Senkung zur Sprühstrahlaufweitung. Aufgrund der kurzen Länge der Spritzlöcher, also kurzen Kegelachse ist besonders hohe Messgenauigkeit bei der Bestimmung des Kegelwinkels von Nöten.

An den Einspritzlöchem müssen Messpunkte an vertikalen Zylinderflächen oder nahezu vertikalen oder sogar überhängenden, also konischen Flächen aufgenommen werden und daraus Durchmesser, Formabweichung bzw. Rauheit bestimmt werden. Aufgrund des geringen Durchmessers der Spritzlöcher im Bereich von ca. 90 µm (Diesel-Einspritzdüsen für PKWs) bzw. ca. 250 µm (Diesel-Einspritzdüsen für LKWs) bzw. ca. 100 µm bis 200 µm (Benzin-Einspritzdüsen für PKWs) und den geringen Toleranzen im Bereich von ca. 5 µm bis 20 µm für den Durchmesser in verschiedenen Tiefen, wobei die maximalen Tiefen sich erstrecken bis ca. 0,7 mm oder auch bis 1,2 mm (Diesel-Einspritzdüsen für PKWs) bzw. bis ca. 1,4 mm oder auch bis 1,5 mm (Diesel-Einspritzdüsen für LKWs) bzw. bis ca. 0,2 mm oder auch bis ca. 0,4 mm (Benzin-Einspritzdüsen für PKWs), ist dies mit der erforderlichen Genauigkeit momentan nur durch mechanisches Antasten möglich, wobei nur besonders kleine Auslenkungen zur Vermeidung von Schaftantastungen zulässig sind. Dafür geeignete Sensoren weisen daher ein an einem Tasterschaft befindliches Antastformelement (zusammen auch Tasterverlängerung genannt) auf, das zum Aufnehmen von Messpunkten mit dem zu messenden Abschnitt des Werkstücks in Kontakt gebracht und ausgelenkt wird. Die Bestimmung der Auslenkung erfolgt entweder rein taktil, also durch Übertragung der Auslenkung über einen biegesteifen Tasterschaft zu einer oberhalb des Tasterschaftes liegenden Sensoreinheit (Auswertebaugruppe) oder optisch, insbesondere mittels eines Bildverarbeitungssensors, der das Antastformelement oder eine diesem zugeordnete am Tasterschaft befindlichen Zielmarke erfasst. Erstgenannte taktile Sensoren sind dem Fachmann hinlänglich bekannt. Die zweitgenannten taktil-optischen Sensoren sind unter anderem in folgenden Schriften der Anmelderin beschrieben.

Die EP0988505 beschreibt ein Verfahren und eine Vorrichtung, bei der von einer Tasterverlängerung über einen biegeelastischen Schaft ein Tastelement (erste Zielmarke) und gegebenenfalls eine weitere Zielmarke ausgehen, deren Koordinaten bei Auslenkung mittels eines optischen Sensors bestimmt werden.

Der EP 1 071 921 ist ein ähnlicher Sensor zu entnehmen, bei dem die Antastkraft über die Steifigkeit des biegeelastischen Schafts angepasst wird, indem ausschließlich die Biegelänge 1 variiert wird.

In der EP 1 082 581 wird für einen entsprechenden Sensor eine optomechanische Schnittstelle mit einer Justiervorrichtung beschrieben.

Die DE 198 24 107 beschreibt die Verwendung eines entsprechenden Sensors für ein Tastschnittverfahren.

In der DE 10 2004 022 314 wird ein entsprechender Sensor an einem Dreh- oder Schwenk-Gelenk betrieben.

Die PCT/EP01/10826 beschreibt unter anderem die Beschichtung des Tastelementes bzw. der Tasterverlängerung auf der dem Sensor abgewandten Seite, um eine leuchtende Marke im Inneren des Tastelementes durch Bündelung der an der Beschichtung reflektierten Strahlung, die in das Innere des Schaftes des Tastelementes bzw. der Tasterverlängerung eingebracht wird, zu erzeugen, deren Lage gemessen wird, und eine dem Antastelement zugeordnete Marke, die durch einen abgedunkelten Bereich des leuchtenden Schaftes des Tastelementes gebildet wird.

Die DE 10 2010 060 833 beschreibt einen taktil-optischen Sensor, bei dem neben der Bestimmung der Position eines Antastformelementes öder zumindest einer diesem zugeordneten Zielmarke in X- und/oder Y-Richtung des Koordinatenmessgeräts mit einem ersten Sensor wie Bildverarbeitungssensor auch eine Bestimmung in der Z-Richtung mit einem zweiten Sensor wie Abstandsensor erfolgt, wobei zur Befestigung des Antastformelementes und der Zielmarken in einer Halterung zumindest ein flexibles Verbindungselement verwendet wird, das vom Strahlengang des ersten Sensors in Strahlrichtung durchdrungen wird, wobei das zumindest eine flexible Verbindungselement transparent ist und/oder in Bezug auf den ersten Sensor stark defokussiert angeordnet wird. Als in Z-Richtung (vertikal verlaufende Richtung) die Auslenkung des Antastformelementes oder zumindest einer diesem zugeordneten Zielmarke erfassender Abstandsensor wird auch beispielsweise ein Interferometer, insbesondere ein absolut messendes Heterodyninterferometer vorgeschlagen.

Der US 2014/0043468 A1 ist ein gattungsgemäßes Koordinatenmessgerät zu entnehmen, bei dem eine zum Einsatz gelangende Frontoptik einen achromatischen Längsfehler aufweisen kann.

Gegenstand der DE 10 2009 025 815 A1 ist ein Handgerät zum dreidimensionalen Messen eines Objektes, insbesondere eines Zahnes. Zum Ausrichten des Handgerätes auf einen zu messenden Zahn wird ein Kamerachip benutzt, der mit Licht beaufschlagt wird, dessen Wellenlängenbereich außerhalb dessen des Messlichts liegt.

Auf den Offenbarungsgehalt aller zuvor genannten Schriften der Anmelderin wird vollständig Bezug genommen.

Aufgabe der vorliegenden Erfindung besteht darin, Mittel zur Verfügung zu stellen, die eine fehlerarme Messung mit einem Bildverarbeitungssensor trotz Verwendung einer gemeinsamen Frontoptik mit chromatischem Längsfehler eines chromatischen Sensors ermöglichen. Insbesondere soll dabei eine Kopplung zwischen dem chromatischen Sensor und einem Bildverarbeitungssensor mit wahlweise einstellbarem Arbeitsabstand und Abbildungsmaßstab realisiert werden.

Die Lösung erfolgt durch die Maßnahmen der nebengeordneten Ansprüche. Ausgestaltungen ergeben sich aus den abhängigen Ansprüchen.

Die Erfindung sieht vor, dass die beiden Strahlengänge des Bildverarbeitungssensors und des Abstandssensors über einen Teiler, insbesondere wellenlängenselektiven Teiler gekoppelt werden und als Frontoptik eine chromatische Längsfehler aufweisende Optik, insbesondere Asphäre, eingesetzt wird.

Damit bei der Kopplung der beiden zuvor genannten Strahlengänge in Bezug auf die zur Verfügung stehende Lichtleistung möglichst verlustfrei gearbeitet werden kann, sieht die Erfindung vor, dass der oder die wellenlängenselektiven Teiler das Spektrum des Lichts aufteilen, sodass beispielsweise der Bildverarbeitungssensor nur einen schmalen Teil des Spektrums empfängt und der chromatische Sensor den verbleibenden Teil des Spektrums empfängt, also insbesondere das komplette aus Richtung des Messobjekts kommende Licht verarbeitet wird.

Zur Lösung sieht die Erfindung entsprechende wellenlängenselektive Teiler wie Dichroide oder Interferenzfilter vor, bei denen Spektralbereiche aufgeteilt werden, insbesondere durch Kaskadierung zweier Dichroide eine Kombination aus Bandpass und Bandsperre erzeugt wird, indem die beiden Dichroide unterschiedliche Trennungswellenlängen bzw. Grenzwellenlängen aufweisen.

Eine weitere Aufgabe der vorliegenden Erfindung besteht darin, unterschiedliche Arbeitsabstände für den Bildverarbeitungssensor und den zweiten Sensor einzustellen, wobei ein möglichst einfacher Aufbau für die Antriebe zur Bewegung der Linsen bzw. Linsengruppen erreicht werden soll.

Zur Lösung sieht die Erfindung hierzu insbesondere vor, dass eine oder mehrere Linsengruppen in den beiden Strahlengängen zumindest teilweise gemeinsam bewegt werden.

Eine weitere Aufgabe der vorliegenden Erfindung besteht darin, in Bezug auf die Frontoptik unterschiedliche Arbeitsabstände für den Bildverarbeitungssensor und den Abstandssensor einzustellen. Dies ist beispielsweise notwendig, wenn die Auslenkung eines vor der Frontoptik angebrachten Antastformelementes optisch bestimmt werden soll, wobei Abstandssensor und Bildverarbeitungssensor das Antastformelement bzw. dem Antastformelement zugeordnete Marke oder Marken, die in unterschiedlichen Arbeitsabständen angeordnet sind, erfassen. Insbesondere sind entsprechende Sensoren, wie beispielsweise in der WO2011064339 beschrieben, derart ausgebildet, dass das mit dem Bildverarbeitungssensor zu erfassende Antastformelement oder eine oberhalb des Antastformelementes am Taststift insbesondere Tasterschaft angeordnete Marke in einem größeren Abstand zur Frontoptik angeordnet ist als eine an der Oberseite des Taststiftes angeordnete Marke, die näher zur Frontoptik angeordnet ist, welche mit dem Abstandssensor erfasst werden muss. Hierbei besteht insbesondere die Herausforderung, unterschiedlich lange Taststifte einzusetzen, wobei der Arbeitsabstand des Bildverarbeitungssensors änderbar sein muss, wobei insbesondere der Arbeitsabstand des Abstandssensors konstant bleiben soll.

Zur Lösung sieht die Erfindung vor, dass die Optiken in den beiden Strahlengängen des Bildverarbeitungssensors und des Abstandssensors derart einstellbar sind, dass verschiedene Arbeitsabstände realisierbar sind.

Die Erfindung sieht zur Lösung der Aufgabe vor ein Koordinatenmessgerät zur geometrischen Bestimmung von Merkmalen, insbesondere Oberflächenmesspunkten, an einem Werkstück, umfassend einen Bildverarbeitungssensor als ersten Sensor mit einem Bildverarbeitungsstrahlengang (erster Strahlengang), wobei der erste Strahlengang zumindest eine Frontoptik umfasst, welche dem zu messenden Werkstück zugewandt ist und als Asphäre ausgebildet ist und/oder einen chromatischen Längsfehler aufweist, und wobei auf der vom Werkstück abgewandten Seite der Frontoptik mindestens ein optischer Teiler, wie Teilerschicht, insbesondere wellenlängenselektiver Teiler, angeordnet ist, durch den ein zweiter Strahlengang mit dem Bildverarbeitungsstrahlengang gekoppelt und ein gemeinsamer Strahlengang gebildet wird, indem die Frontoptik aus Richtung des zu messenden Werkstücks durchlaufendes Licht zumindest teilweise aus dem gemeinsamen Strahlengang in den zweiten Strahlengang ausgekoppelt wird, wobei der zweite Strahlengang einem als zweiten Sensor chromatischen Abstandsensor zugeordnet ist, wobei der Bildverarbeitungssensor und der zweite Sensor zur direkten Messung der Werkstückoberfläche und/oder zur Bestimmung der Auslenkung einer oder jeweils einer einem biegeelastischen Taststift zugeordneten Marke ausgebildet sind, wobei der wellenlängenselektive Teiler gesamtes Spektrum des Lichts in den zweiten Strahlengang leitet und dem ersten Sensor ein schmaler Bereich des Spektrums zugeführt wird.

Asphären sind besonders geeignet, da definierte chromatische Längsfehler genau und einfach realisiert werden können.

Insbesondere zeichnet sich die Erfindung dadurch aus, dass der Bildverarbeitungssensor einen Bildsensor wie CCD oder CMOS-Kamera aufweist und im ersten Strahlengang zwischen dem Bildsensor und dem Teiler und/oder zwischen der Frontoptik und dem Teiler mindestens zwei separat verschiebbare Linsen oder Linsengruppen zur unabhängigen Einstellung von Arbeitsabstand und Abbildungsmaßstab angeordnet sind.

Bevorzugterweise ist vorgesehen, dass die Asphäre eine ausgeprägte chromatische Aberration (chromatischer Längsfehler) aufweist und im zweiten Strahlengang ein wellenlängenempfindlicher Detektor wie Spektrometer angeordnet ist, und wobei zumindest ein Teiler derart wellenlängenselektiv ausgeführt ist, dass aus dem Spektrum des aus Richtung des Werkstücks auf den Teiler treffenden Lichtes lediglich ein begrenzter Wellenlängenbereich in Richtung des Bildsensor des Bildverarbeitungsstrahlengangs geleitet wird,
- indem ein Teiler so ausgeführt ist, dass dieser den begrenzten Wellenlängenbereich oberhalb einer oberen Grenzwellenlänge reflektiert oder durchlässt, wobei die obere Grenzwellenlänge bevorzugt größer als etwa 600 Nanometer ist, wodurch im wesentlichen rotes Licht in Richtung des Bildsensor gelangt, wobei der Teiler bevorzugt ein Dichroid ist, oder
- indem ein Teiler so ausgeführt ist, dass dieser einen begrenzten Wellenlängenbereich unterhalb einer unteren Grenzwellenlänge reflektiert oder durchlässt, wobei die untere Grenzwellenlänge bevorzugt kleiner als etwa 500 Nanometer ist, wodurch im wesentlichen blaues Licht in Richtung des Bildsensor gelangt, wobei der Teiler bevorzugt ein Dichroid ist, oder
- indem ein Teiler als Bandpass oder Bandsperre ausgeführt ist, so dass dieser den begrenzten Wellenlängenbereich oberhalb einer unteren Grenzwellenlänge und unterhalb einer oberen Grenzwellenlänge reflektiert oder durchlässt, wobei der Wellenlängenbereich vorzugsweise nahezu einfarbig ist, bevorzugt eine spektrale Breite von maximal 100 Nanometer, besonders bevorzugt maximal 50 Nanometer aufweist, wobei der Teiler bevorzugt zumindest einen Interferenzfilter umfasst.

Hierdurch wird realisiert, dass der Bildsensor des Bildverarbeitungssensors nur einen schmalen spektralen Bereich empfängt, wodurch chromatische Fehler, die durch die Frontoptik eingeführt werden, minimiert werden.

Insbesondere zeichnet sich die Erfindung dadurch aus, dass der wellenlängenselektive Teiler den Teil des Spektrums des Lichtes, der nicht in Richtung des Bildsensors geleitet wird, in den zweiten Strahlengang leitet oder dass der wellenlängenselektive Teiler gesamtes Spektrum des Lichts in den zweiten Strahlengang leitet.

Hierdurch wird realisiert, dass ein möglichst großer Anteil des Lichts zur Auswertung zur Verfügung steht, wobei insbesondere der im zweiten Strahlengang vorhandene wellenlängenempfindliche Detektor das zur Auswertung des Abstandes mittels des chromatischen Abstandssensors benötigte breite Lichtspektrum empfängt.

Bevorzugterweise sieht die Erfindung vor, dass zwischen dem zumindest einen wellenlängenselektiven Teiler und der Frontoptik ein neutraler Teiler zur Kopplung des zweiten Strahlengangs angeordnet ist, wobei der zweite Strahlengang vorzugsweise breitbandige Lichtquelle umfasst, deren Licht in Richtung des Werkstücks einkoppelt wird, und besonders bevorzugt der wellenlängenselektive Teiler ein Dichroid oder Farbfilter ist.

Durch Verwendung des neutralen Teilers steht für den chromatischen Abstandssensor das komplette Wellenlängenspektrum zur Verfügung. Zur Minimierung der chromatischen Fehler im Bildverarbeitungsstrahlengang ist daher lediglich ein Dichroid oder Farbfilter notwendig.

Hervorzuheben ist des Weiteren, dass zur Beleuchtung des zumindest von der Frontoptik erfassten Bereichs des Werkstücks oder Taststifts zumindest eine breitbandige Lichtquelle und Mittel zum Einkoppeln in den ersten und/oder zweiten Strahlengang vorhanden sind, und vorzugsweise zumindest eine weitere Lichtquelle und Mittel zum Einkoppeln in den ersten und/öder zweiten Strahlengang vorhanden sind, wobei der spektrale Anteil der weiteren Lichtquelle sich weitestgehend mit dem begrenzten Wellenlängenbereich überdeckt, der vom wellenlängenselektiv Teiler in Richtung des Bildsensor geleitet wird.

Die Erfindung zeichnet sich auch dadurch aus, dass die Asphäre eine ausgeprägte chromatische Aberration (chromatischer Längsfehler) aufweist und im zweiten Strahlengang ein wellenlängenempfindlicher Detektor wie Spektrometer angeordnet ist, und wobei im gemeinsamen Strahlengang nacheinander zwei wellenlängenselektive Teiler, bevorzugt Dichroide angeordnet sind, die das Spektrum des aus Richtung des Werkstücks auf die Teiler treffenden Lichtes jeweils an einer Grenzwellenlänge trennen, also oberhalb dieser reflektieren und unterhalb dieser durchlassen oder umgekehrt, wobei die beiden Teiler unterschiedliche Grenzwellenlängen besitzen, bevorzugt Differenz der Grenzwellenlängen kleiner 100 Nanometer, besonders bevorzugt kleiner 50 Nanometer ist, und dass der spektrale Bereich zwischen den Grenzwellenlängen in Richtung des Bildsensor und der verbleibende spektrale Bereich in Richtung des wellenlängenempfindlichen Detektors geleitet wird.

Entsprechend dieses Vorschlags entsteht kein Verlust an Lichtleistung und die Vorrichtung kommt mit Standardbauteilen wie Dichroiden aus und ist damit besonders kostengünstig. Über die Wahl der beiden Grenzwellenlätigen ist der auf den Bildsensor gelenkte Anteil einstellbar, sodass Fehler durch die chromatischen Aberrationen im Bildverarbeitungsstrahlengang bewusst einstellbar bzw. minimierbar sind.

Insbesondere zeichnet sich die Erfindung dadurch aus, dass das Licht der beiden nicht in Richtung des Bildsensors geleiteten spektralen Bereiche
- in unterschiedliche Lichtleitfasern eingekoppelt wird, wobei jede Lichtleitfaser zu einem separaten wellenlängenempfindlichen Detektor führt oder Lichtleitfasern gekoppelt und auf einen wellenlängenempfindlichen Detektor geführt werden, oder
- durch Einstellung der Neigung der Dichroide, wobei das jeweilige Licht am Dichroid reflektiertes Licht ist, und/oder durch Umlenkspiegel und/oder Optik auf weitestgehend selben Bereich eines wellenlängenempfindlichen Detektors gelenkt oder in eine zu einem wellenlängenempfindlichen Detektor führende Lichtleitfaser eingekoppelt wird.

Nach einem besonders hervorzuhebenden Vorschlag ist vorgesehen, dass erster und zweiter Strahlengang und damit erster und zweiter Sensor zueinander verschiedene Arbeitsabstände in Bezug auf die Frontoptik aufweisen, wobei Arbeitsabstand des Bildverarbeitungssensors unabhängig von Arbeitsabstand des zweiten Sensors einstellbar ist.

Hierdurch ist es unter anderem möglich, den Arbeitsabstand des Bildverarbeitungssensors unabhängig vom Arbeitsabstand des Abstandssensors für unterschiedlich lange Taststifte einer biegeelastischen Tasterverlängerung bzw. eines biegeelastischen Taststiftes einzustellen.

Besonders hervorzuheben ist, dass zweiter Strahlengang zumindest eine Linse oder Linsengruppe enthält, durch die ein im Vergleich zum Strahlengang des Bildverarbeitungssensors abweichender, insbesondere kürzerer Arbeitsabstand realisiert wird.

Des Weiteren zeichnet sich die Erfindung dadurch aus, dass zweiter Strahlengang zumindest zwei separat verschiebbare Linsen oder Linsengruppen zur unabhängigen Einstellung von Arbeitsabstand und Abbildungsmaßstab umfasst, wobei Linsen oder Linsengruppen des zweiten Strahlengangs unabhängig von Linsen oder Linsengruppen des ersten Strahlengangs bewegbar sind oder zumindest eine Linse oder Linsengruppe des ersten Strahlengangs mit zumindest einer Linse oder Linsengruppe des zweiten Strahlengangs gemeinsam bewegbar ist, besonders bevorzugt jeweils eine Linse oder Linsengruppe des ersten mit einer Linse oder Linsengruppe des zweiten Strahlengangs gemeinsam bewegbar ist.

Bevorzugterweise ist vorgesehen, dass vor der Frontoptik ein biegeelastischer Taststift mit zumindest einem Antastformelement zur Berührung des Werkstücks angeordnet ist oder anordenbar ist, wobei der Taststift zumindest eine dem Taststift bzw. Antastformelement zugeordnete vorzugsweise am oberen Ende des Taststifts angebrachte, erste Marke aufweist, die durch den zweiten Strahlengang des optischen Abstandssensors erfasst wird, und wobei der Taststift vorzugsweise eine dem Taststift bzw. Antastformelement zugeordnete am Taststift oberhalb des Antastformelements angeordnete zweite Marke aufweist, wobei das Antastformelement oder die zweite Marke durch den Strahlengang des Bildverarbeitungssensors erfasst wird und wobei erster und zweiter Sensor zueinander verschiedene Arbeitsabstände in Bezug auf die Frontoptik aufweisen.

Zur Lösung sieht die Erfindung auch ein Verfahren zur geometrischen Bestimmung von Merkmalen, insbesondere Oberflächenmesspunkten an einem Werkstück unter Verwendung des zuvor genannten Koordinatenmessgeräts vor, dass sich dadurch auszeichnet, dass wahlweise mit dem Bildverarbeitungssensor oder dem chromatischen Sensor Messpunkte direkt auf der Oberfläche des Werkstücks aufgenommen werden, wobei mittels zumindest einem wellenlängenselektiven Teiler Bildsensor des Bildverarbeitungssensor lediglich schmalbandiger Spektralbereich, und zwar maximal 100 Nanometer breiter, besonders bevorzugt maximal 50 Nanometer breiter Bereich, beispielsweise blauer Bereich zwischen etwa 450 und 500 Nanometern, des vom Werkstück reflektierten Lichtes zur Auswertung zugeführt wird, und mittels wellenlängenselektivem oder neutralem Teiler dem chromatischen Sensor breitbandiger Spektralbereich oder mehrere Spektralbereiche des vom Werkstück reflektierten Lichtes zur Auswertung zugeführt werden.

Die Verwendung des blauen Bereichs für den Bildverarbeitungssensor hat den Vorteil, dass aufgrund der geringeren Wellenlänge im Vergleich zum beispielsweise roten Bereich eine höhere Strukturauflösung erzielt werden kann. Die Erfindung ist jedoch nicht auf den blauen Bereich begrenzt. Sämtliche andere Bereiche des sichtbaren bzw. für den Bildsensor empfangbaren Spektrums sind vorgesehen.

Zur Lösung sieht die Erfindung zudem ein Verfahren zur geometrischen Bestimmung von Merkmalen, insbesondere Oberflächenmesspunkten an einem Werkstück unter Verwendung des zuvor genannten Koordinatenmessgeräts vor, dass sich dadurch auszeichnet, dass Messpunkte bei Berührung des Antastfontielementes mit dem Werkstück aufgenommen werden, wobei unterschiedliche lange Taststifte einsetzbar sind, und der Arbeitsabstand des Bildverarbeitungssensors auf die Länge des jeweils verwendeten Taststifts angepasst wird durch separates Verstellen von zumindest zwei im ersten Strahlengang vorhandener Linsen oder Linsengruppen, wobei vorzugsweise
- Linsen oder Linsengruppen des ersten Strahlengangs unabhängig von Linsen oder Linsengruppen des zweiten Strahlengangs bewegt werden oder
- zumindest eine Linse oder Linsengruppe des ersten Strahlengangs mit zumindest einer Linse oder Linsengruppe des zweiten Strahlengangs gemeinsam bewegt werden oder
- jeweils eine Linse oder Linsengruppe des ersten mit einer Linse oder Linsengruppe des zweiten Strahlengangs gemeinsam bewegt wird.

Die Lage von Messpunkten an einer Werkstückoberfläche (Oberflächenpunkte) kann mit einem hochgenauen optischen Abstandsensor wie Interferometer bestimmt werden.

Die den Ansprüchen zu entnehmenden Merkmale können gegebenenfalls beliebig kombiniert werden, und zwar unabhängig von den in den Ansprüchen berücksichtigten Rückbeziehungen.

Weitere Einzelheiten, Vorteile und Merkmale der Erfindungen ergeben sich nicht nur aus den Ansprüchen, den diesen zu entnehmenden Merkmalen - für sich und/oder in Kombination - sondern auch aus der nachfolgenden Beschreibung der Figuren.

Es zeigen:
- Fig. 1: eine Prinzipdarstellung eines Werkstücks, das mit dem erfindungsgemäßen Verfahren gemessen wird, befestigt in einer Drehvorrichtung
- Fig. 2: eine Prinzipdarstellung des Werkstücks und der zur mechanischen Ausrichtung eingesetzten Dreh-Schwenk-Einrichtung, integriert in ein Koordinatenmessgerät,
- Fig. 3: eine Prinzipdarstellung von zu messenden Abschnitten eines Bereiches eines ersten Werkstücks und Tasterschaft des zur Messung verwendeten ersten Sensors in geeigneter mechanischer Ausrichtung,
- Fig. 4: eine Prinzipdarstellung von zu messenden Abschnitten eines Bereiches eines zweiten Werkstücks und Tasterschaft des zur Messung verwendeten ersten Sensors in geeigneter mechanischer Ausrichtung,
- Fig. 5: Eine Prinzipdarstellung einer erfindungsgemäßen Vorrichtung zur Kopplung zweier Strahlengänge mit einem Teiler,
- Fig. 6: eine erste Detaildarstellung zum Teiler,
- Fig. 7: eine zweite Detaildarstellung zu Teilern,
- Fig. 8: eine weitere Prinzipdarstellung einer erfindungsgemäßen Vorrichtung mit einem biegeelastischen Taststift und
- Fig. 9: eine weitere Prinzipdarstellung einer erfindungsgemäßen Vorrichtung mit einem ersten optisch, interferometrischen Abstandsensor und einem zweiten optischen Abstandsensor zur Erfassung von Marken an einer Tasterverlängerung.

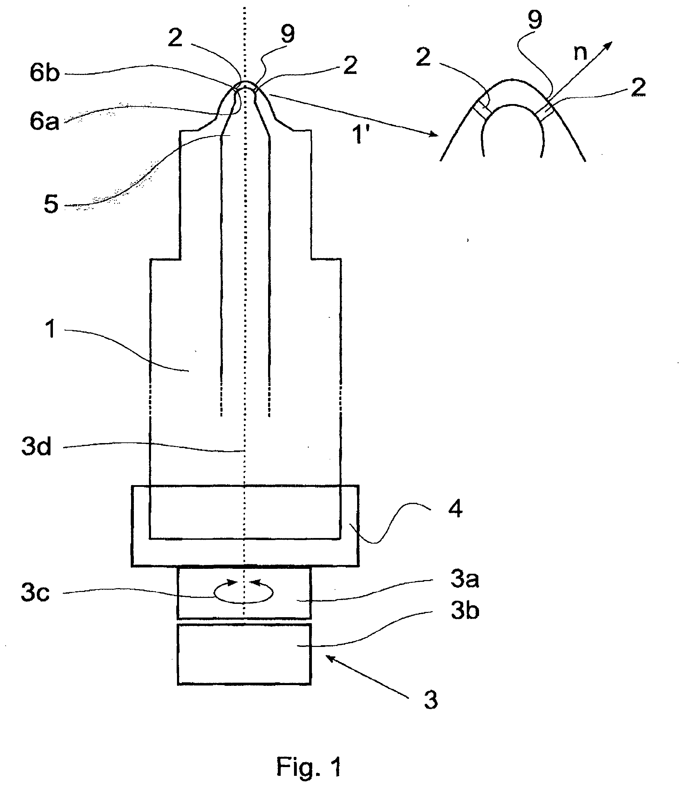

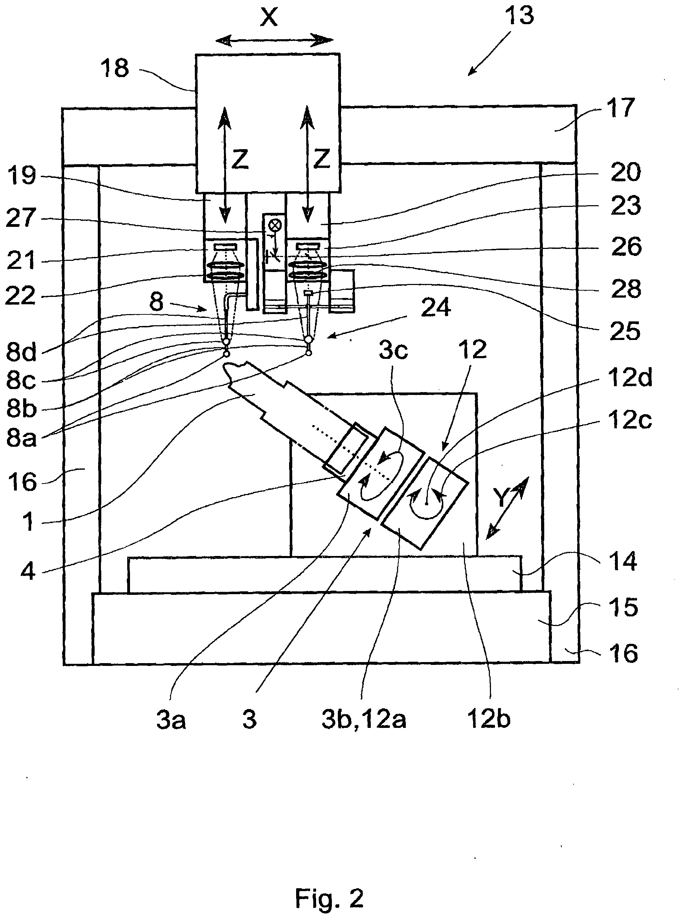

Die Figur 1 zeigt beispielhaft eine vereinfachte Darstellung eines typischen Werkstücks 1 in Form einer Einspritzdüse für PKWs oder LKWs mit mehreren Mikrogeometrien, die als Öffnungen ausgebildet sind wie Bereiche 2, im Beispiel mehrere am Umfang um die Zentralachse 3d verteilte Spritzlöcher 2. Die Darstellung der Einspritzdüse erfolgt nicht vollständig, sondern durch gestrichelte Linien unterbrochen. Insbesondere der unterhalb der Bereiche 2 in Richtung der mechanischen Drehachse 3 befindliche Bereich ist deutlich komplizierter aufgebaut, hier aber nur angedeutet. Die Bereiche (Spritzlöcher) 2 gehen an ihrem unteren Ende 6a von einem im Inneren der Einspritzdüse befindlichen Kanal 5 aus und erstrecken sich bis zum an oder Nahe der Oberfläche 9 des Werkstücks befindlichen oberen Ende 6b. Um die mehreren Bereiche 2 einer Messung durch einen Sensor zugänglich zu machen, also mechanisch auszurichten, ist die Einspritzdüse 1 mittels einer Aufspannvorrichtung 4 am entlang des Pfeiles 3c um die Drehachse 3d in Bezug auf den feststehenden Teil 3b drehbaren Teil 3a einer mechanischen Drehachse 3 drehbar. Die Mittelachsen der Spritzlöcher 2 nehmen beispielhaft etwa den gleichen Winkel (Höhenwinkel) zur Zentralachse 3d ein. Es sind aber auch Einspritzdüsen mit Spritzlöchem mit unterschiedlichen oder sogar mehreren Höhenwinkeln verfügbar und zudem muss die mechanische Ausrichtung für jeden Bereich 2 getrennt sehr genau erfolgen, so dass zusätzlich auch ein Schwenken des Werkstücks 1 mittels einer mechanischen Schwenkachse 12, hier nicht, sondern erst in Figur 2 dargestellt, erfolgt. Mechanische Schwenkachse 12 und mechanische Drehachse 3 bilden zusammen oft eine Dreh-Schwenk-Einrichtung.

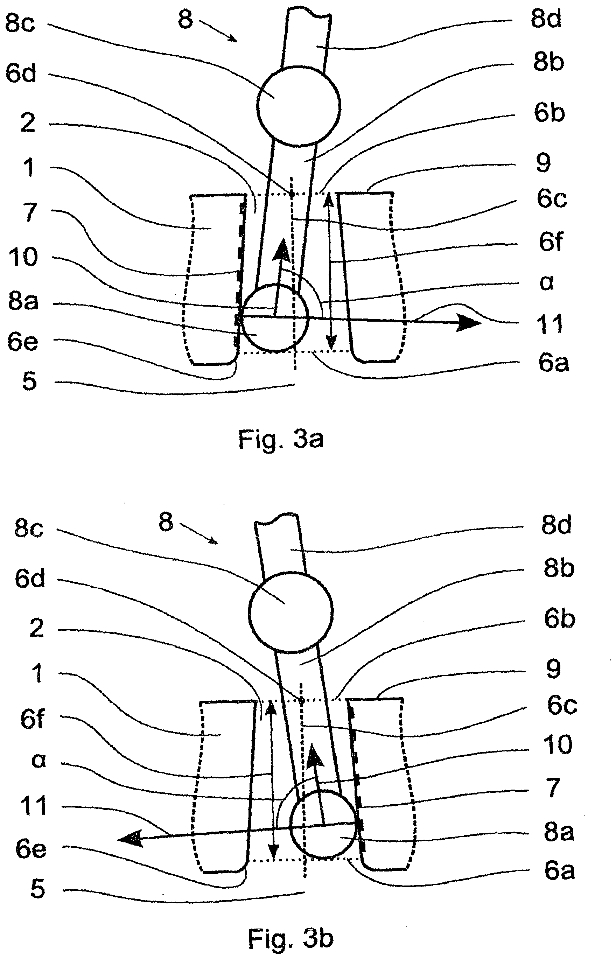

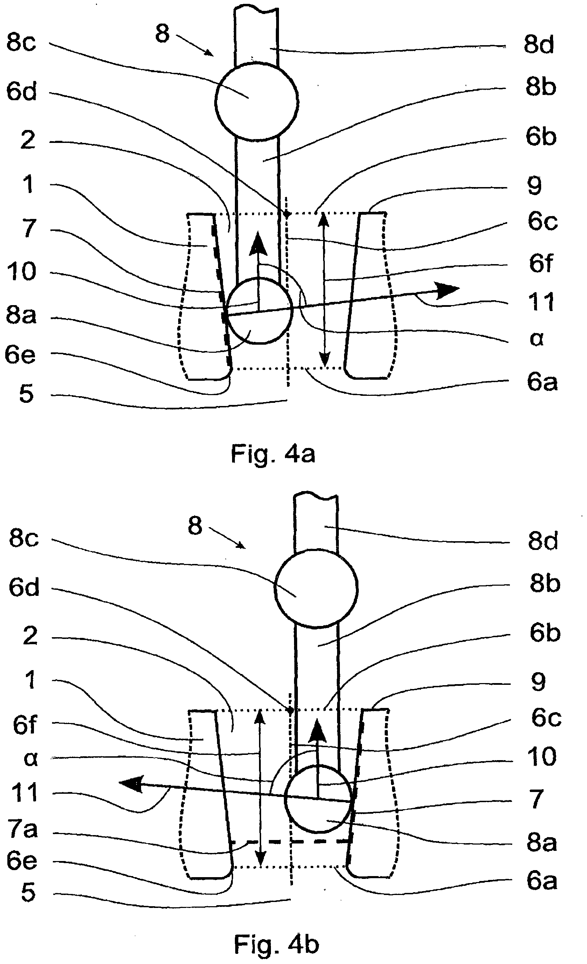

Mit dem Pfeil 1 gekennzeichnet ist zudem eine vergrößerte Darstellung des oberen Bereiches der Einspritzdüse 1. Die Oberflächennormale der Oberfläche 9 des Werkstücks ist mit dem Bezugszeichen n gekennzeichnet und bezeichnet die Senkrechte zur Oberfläche 9 in der direkten Umgebung der jeweiligen Öffnung 2. Die Oberflächennormale n unterscheidet sich von der in den Figuren 3 und 4 gezeigten Oberflächennormale 11 eines Abschnitts 7.

Figur 2 zeigt ein beispielhaftes Koordinatenmessgerät 13 mit mehreren Sensoren 8, 21, 24, 23, 27, der Dreh-Schwenkeihrichtung, bestehend aus mechanischer Drehachse 3 und mechanischer Schwenkachsc 12, und das an der Dreh-Schwenk-Einrichtung mittels der Aufspannvorrichtung 4 befestigte Werkstück 1. Die Dreh-Schwenk-Einrichtung ist am Messtisch 14 befestigt, der seinerseits in Y-Richtung mittels Messachsen verschiebbar von einer Basis 15 ausgeht. Von der Basis 15 gehen zudem die beiden Stützen 16 aus, an denen die Brücke 17 befestigt ist. Der Läufer 18 ist entlang der X-Richtung zur Brücke 17 mittels Messachsen verschiebbar. Vom Läufer 18 gehen die beiden Pinolen 19 und 20 aus, die zum Läufer 18 mittels Messachsen in Z-Richtung verschiebbar sind.

An der ersten Pinole 19 befindet sich zum einen ein Bildverarbeitungssensor 21, hier als weiterer Sensor bezeichnet, und ein aus Tasterverlängerung 8 und Bildverarbeitungssensor 21 gebildeter taktil-optischer Sensor, der hier als erster Sensor bezeichnet wird. Die Tasterverlängerung umfasst einen Tasterschaft 8d, 8b, von dem das Antastformelement 8a und die Zielmarke 8c ausgehen. Der direkt oberhalb der Zielmarke 8c befindliche Bereich 8d des Tasterschaftes ist abschnittsweise biegeelastisch als zum Beispiel Glasfaser ausgeführt. Die senkrecht zur Tasterschaftachse durch Berührung der zu messenden Abschnitte des Werkstücks 1 ausgelöste Auslenkung des Antastformelementes 8a wird durch den durch seine kurze Länge weitgehend biegesteifen Bereich 8b des Tasterschaftes an die Zielmarke 8c übertragen und durch Erfassung der Zielmarke 8c mit dem Bildverarbeitungssensor 21 gemessen.

An der zweiten Pinole 20 befindet sich ebenso ein Bildverarbeitungssensor 23, eine modifizierte Tasterverlängerung 24, die am oberen, vom Antastformelement 8a abgewandten Ende eine zweite Zielmarke 25 umfasst, und ein optischer Abstandsensor 27, die zusammen auch einen weiteren taktil-optischen Sensor, und zwar einen dreidimensional die Auslenkung des Antastformelementes 8a erfassenden taktil-optischen Sensor bilden. Die Zielmarke 25 ist ein zumindest teilweise als reflektierende Fläche ausgebildeter Reflektor 25, der den Messstrahl des weiteren Abstandsensor 27 zurück in den Sensor 27 reflektiert. Dieser erfasst dadurch indirekt die Auslenkung des Antastformelementes 8a in Richtung der Schaftachse des Tasterschaftes 8d, 8b. Die Auslenkung senkrecht dazu wird wiederum durch Erfassen der Zielmarke 8c durch den Bildverarbeitungssensor 23 realisiert. Abstandsensor 27 und Bildverarbeitungssensor 23 verwendet dabei zumindest teilweise die gleiche Abbildungsoptik 28 bzw. 22, sofern, hier nicht dargestellt, auch an der ersten Pinole 19 ein Abstandsensor angebracht ist.

Der Einsatz von zwei Pinolen und den beiden Sensorgruppen 8,21 und 23, 24, 27 ist nur beispielhaft. Sämtliche Sensoren 8, 21, 24, 23, 27 können auch an einer Pinole befestigt sein. Die Kombination der Sensoren 8, 21 und 27 ist ebenso möglich. Zudem können die Tasterverlängerungen 8 und 24 jeweils in Wechselmagazinen, hier nicht dargestellt, manuell oder bevorzugt automatisch abgelegt werden. Dann können die Sensoren 22, 23 und 27 auch unabhängig voneinander die Oberfläche des Objektes 1 erfassen. Mit dem Bildverarbeitungssensor 22, 23 ist teilweise auch eine Erfassung von in Öffnungen liegenden Strukturen möglich, wie dies zu Figur 3 noch erläutert werden wird.

Der gezeigte beispielhafte Aufbau des Koordinatenmessgerätes 13 entspricht der Bauart "feste Brücke", der aufgrund hoher erzielbarer Genauigkeiten für die Messung von Mikromerkmalen bevorzugt ist, ohne dass dies eine Einschränkung der Erfindung darstellt. Weitere Bauarten wie beispielsweise "bewegliche Brücke", "Tischgeräte", "Ausleger" oder "Ständer" sind ebenso denkbar.

Damit der jeweilige Bereich 2 von einem der Sensoren erfasst werden kann, wird neben dem translatorischen Positionieren mit den zuvor genannten Messachsen das Werkstück durch die Dreh-Schwenk-Einrichtung rotatorisch gedreht, mittels bereits erläuterter mechanischer Drehachse 3, und geschwenkt. Das Schwenken erfolgt mittels der mechanischen Schwenkachse 12, die ein Schwenken des schwenkbaren Teils 12a in Richtung des Pfeiles 12c um die Schwenkachse 12d in Bezug auf den feststehenden Teil 12b erlaubt. Translatorische und rotatorische Bewegungen werden für die Grobausrichtung und auch die mechanische (Fein-)Ausrichtung verwendet. Das Drehen ist unter anderem notwendig, um von einem Bereich 2 zum nächsten zu gelangen, durch Schwenken erfolgt das Anpassen an den Höhenwinkel.

Die Figuren 3a und 3b zeigen die Messung zweier Abschnitte 7 am Bereich 2, wobei jeweils zuvor eine getrennte mechanische Ausrichtung erfolgte. Die rotatorische mechanische Ausrichtung erfolgte dabei, bevor das Antastformelement 8a und der Tasterschaft mit seinem Bereich 8b in die Öffnung 2 eintauchte. Dies war notwendig, um die beiden Bereiche 7 sicher ohne Schaftantastung durchzuführen, weil der Durchmesser des Bereiches 2 in Richtung auf den innen liegenden Kanal 5 in seinem Durchmesser zunimmt. Am unteren Ende 6a des Bereiches 2 liegt also ein größerer Durchmesser vor als am oberen Ende 6b, wie dies beispielsweise bei Spritzlöchern von Diesel-Einspritzdüsen der Fall ist. Der Übergang des Bereiches 2 in den Kanal 5 weist eine Verrundung 6e auf. Die maximale Tiefe des Bereiches 2 ist mit 6f gekennzeichnet, die Mittelachse mit 6c und der Eintrittspunkt in die Öffnung 2, bezeichnet als Öffnungsmitte mit 6d.

Der Bereich 2 ist beispielhaft kegelförmig ausgebildet. Eine zylindrische Ausbildung ist ebenso denkbar. Der zu messende Bereich 7 ist eine Mantellinie bzw. Kegelmantellinie und erstreckt sich in Richtung der auf den Kegelmantel projizierten Mittelachse 6c. Zum kollisionsfreien Eintauchen des Antastformelementes 8a in die Öffnung 2 und Messen von Messpunkten als Einzelpunkte oder scannend entlang des Abschnitts 7 erfolgt das rotatorische mechanische Ausrichten zuvor so, dass der Tasterschaft 8b von der den Abschnitt 7 enthaltenden Wand des Bereiches 2 bei Berührung mit dem Antastformelement 8a weg verläuft, also ein Winkel α zwischen der Oberflächennormale 11 des Abschnitts 7 und der Schaftachse 10 von kleiner als 90° vorliegt. Bevorzugt beträgt a etwa 89,7° bis 89,5°, damit auch bei Auslenkung des Antastformelementes 8a keine Schaftantastung erfolgt. Zu kleine Winkel bergen die Gefahr, dass Schaftantastung bzw. Kollision mit der gegenüberliegenden Wand des Bereiches 2 erfolgt. Winkel von genau 90° sind denkbar, jedoch nur bei geringen Auslenkungen.

Es ist zu beachten, dass die Größenverhältnisse des Durchmessers von Antastformelement 8a und Durchmesser und Tiefe 6f des Bereiches 2 beispielhaft sind. Im Fall von Spritzlöchern sind die Tiefe 6f und der Durchmesser des Antastformelementes im Vergleich zum Durchmesser des Bereichs größer.

Beispielhaft beträgt die Tiefe 6f 0,7 mm bis 1,2 mm, insbesondere 1 mm, der Durchmesser in den Bereichen 6a und 6b bzw. der mittlere Durchmesser zwischen 6a und 6b 80 µm bis 90 µm, insbesondere 90 µm, und der Durchmesser des Antastformelementes 8a 20 µm bis 80 µm, insbesondere 70 µm. Der Durchmesser der bevorzugt vorhandenen Zielmarke 8c beträgt beispielhaft 80 µm bis 120 µm, insbesondere 95 µm, und der Abstand zwischen Zielmarke 8c und Antastformelement 8a 1,3 mm bis 1,5 mm, insbesondere 1,5 mm.

Vor dem eigentlichen mechanischen Ausrichten, also dem translatorischen und rotatorischen Positionieren muss die Lage des jeweiligen Bereiches, charakterisiert durch Lage der Mittelachse 6c und Position der Öffnungsmitte 6d, bestimmt werden. Hierzu sind mehrere Verfahren vorgesehen. Nach einer Grobausrichtung anhand der Solldaten wird bei einem der erfinderischen Verfahren an der Oberseite 6b der Mittelpunkt des Bereiches 2 durch Kreismessung mittels des Bildverarbeitungssensors 21 bestimmt. Alternativ erfolgt die Bestimmung mit dem taktil-optischen ersten Sensor, also indem das Antastformelement 8a nur leicht unterhalb der Oberseite 6b in die Öffnung eintaucht. Zusätzlich wird ein zweiter Mittelpunkt bestimmt, in Höhe des unteren Endes 6a oder in etwa halber Tiefe der maximalen Tiefe 6f mit dem taktil-optischen ersten Sensor. Die Verbindungslinie der beiden Mittelpunkte ergibt die Mittelachse 6c. Die Messungen mit dem Bildverarbeitungssensor 21 erfolgen bei einer, nicht dargestellten, Durchlichtbeleuchtung, realisiert durch eine diffus leuchtende Lichtquelle, die in den Kanal 5 eingeführt wird. Alternativ werden mit dem taktil-optischen ersten Sensor Mantellinien bis in die halbe maximale Tiefe verlaufend gescannt und ein Ausgleichzylinder oder Ausgleichkegel berechnet, dessen Achse die Mittelachse 6c bildet. Die Öffnungsmitte 6d wird durch Bestimmung von einem Messpunkt auf der Oberfläche 9 des Werkstücks nahe der Öffnung 2 mit dem Bildverarbeitungssensor im Autofokus-Modus oder dem weiteren Abstandsensor 27 bestimmt, wobei die Tasterverlängerung 8 bzw. 24 vorzugsweise abgelegt wurde oder durch Vergrößerung des Arbeitsabstandes des Bildverarbeitungssensors 21 bzw. Abstandsensors 27 unscharf wird.

Anschließend erfolgt die mechanische (Fein-)Ausrichtung unter Berücksichtigung der Oberflächennormale 11 des jeweiligen Abschnittes 7, so dass sich der Winkel α ergibt, wobei sich die Lage des Abschnittes 7 aus den Solldaten wie CAD-Daten ergibt. Die translatorische Positionierung in die Öffnung 2 hinein erfolgt erst nach der rotatorischen mechanischen Ausrichtung.

In den Figuren 4a und 4b ist, ähnlich wie in Figur 3 die Messung zweier Abschnitte 7 am Bereich 2 eines zweiten Werkstücks gezeigt, wobei nun aber keine getrennte rotatorische mechanische Ausrichtung je Abschnitt erfolgt, da der Durchmesser des Bereiches 2 nach innen hin abnimmt, alle Bereiche 7 also unter Einhaltung des gleichen Winkels α in einer Dreh-Schwenk-Stellung der Dreh-Schwenk-Einheit ohne Schaftantastung erreichbar sind. Der Tasterschaft 10 ist dabei parallel zur Mittelachse 6c ausgerichtet. Beim zweiten Werkstück handelt es sich beispielsweise um eine Benzin-Einspritzdüse und die Bereiche 2 sind deren Spritzlöcher. Durch die gleichbleibende rotatorische Ausrichtung sind nun neben den Mantellinien auch weitere Abschnitte 7a messbar. Diese können entlang des Umfangs des Kegels oder aber beliebig innerhalb des Bereiches 2 wie Kegelmantel verlaufen.

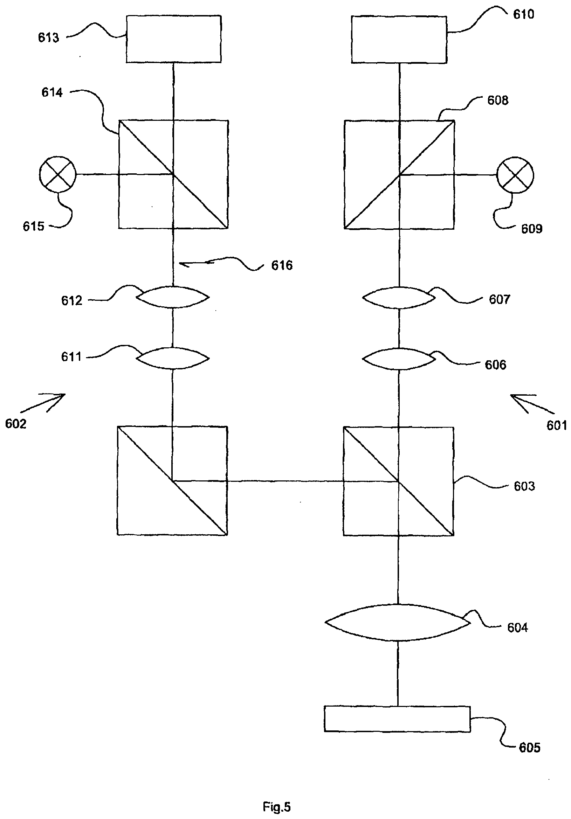

Anhand der Figur 5 wird die Kopplung des ersten Strahlengangs 601 des Bildverarbeitungssensors und des zweiten Strahlengangs 602 eines Abstandssensors mittels des Teilers 603 dargestellt. Nach dem Vereinigen durchlaufen die beiden Strahlengänge 601 und 602 einen gemeinsamen Strahlengang in Richtung des Werkstücks 605, welcher beispielhaft hier lediglich zusätzlich aus der Frontoptik 604 besteht, wobei der Teiler 603 ebenso zum gemeinsamen Strahlengang zu zählen ist. Der erste Strahlengang 601 weist zudem die beiden verschiebbaren Linsengruppen 606 und 607 auf, sowie einen weiteren Strahlteiler 608 zur Einkopplung des Lichts der Lichtquelle 609, sowie den Bildsensor 610, wie CCD- oder CMOS-Kamera 610. Der zweite Strahlengang 602 weist zumindest die verschiebbaren Linsengruppen 611 und 612 auf. Bevorzugt ist im zweiten Strahlengang 602 ebenso eine über den Strahlteiler 614 einkoppelbare Lichtquelle 615 vorhanden. Zudem zählt der Empfänger 613 zum Strahlengang 602, welcher im Fall eines chromatischen Sensors als Spektrometer und im Fall eines Foucault-Sensors als Differenzdiode ausgebildet ist. Im Fall des foucaultschen Sensors ist zudem im Strahlengang 602 die Schneide 616 vorgesehen.

Für den Fall, dass der zweite Strahlengang 602 mit dem chromatischen Sensor ausgestattet ist, kann beispielsweise der Strahlengang zwischen den Linsengruppen 612 und dem Strahlteiler 614 zumindest teilweise als optische Faser ausgeführt sein. Ebenso kann der Bereich zwischen dem Teiler 603 und der Linsengruppe 611 zumindest teilweise als optische Faser ausgeführt sein.

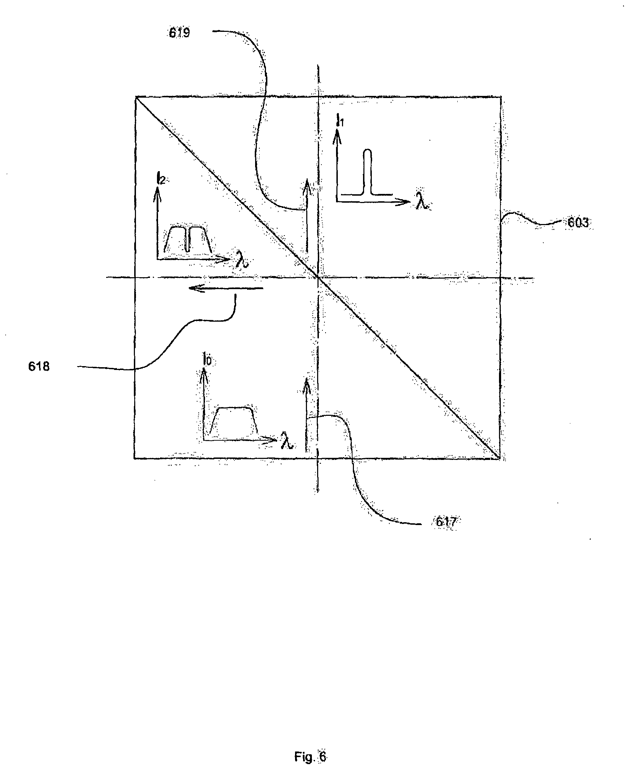

Fig. 6 zeigt eine erste Ausgestaltung der erfindungsgemäßen Vorrichtung in Bezug auf den Teiler 603. Dieser ist derart ausgebildet, dass aus Richtung des Werkstücks 605 stammendes Licht 617, welches breitbandiges Licht I₀ ist, aufgeteilt wird in einen Teilstrahl 618 mit der spektralen Verteilung I₂ in Richtung des zweiten Strahlengangs 602 und in den Teilstrahl 619 mit der Intensität I₁, welcher in den ersten Strahlengang 601 in Richtung des Bildsensors 610 gelenkt wird. Hierdurch steht dem chromatischen Abstandssensor ein großer spektraler Bereich zur Auswertung des Abstandes zur Verfügung und der Bildverarbeitungssensor erhält nur einen schmalen spektralen Bereich, der kaum chromatische Fehler aufweist. Der Teiler 603 ist dazu mit einer oder mehreren speziellen wellenlängenselektiven Schichten versehen.

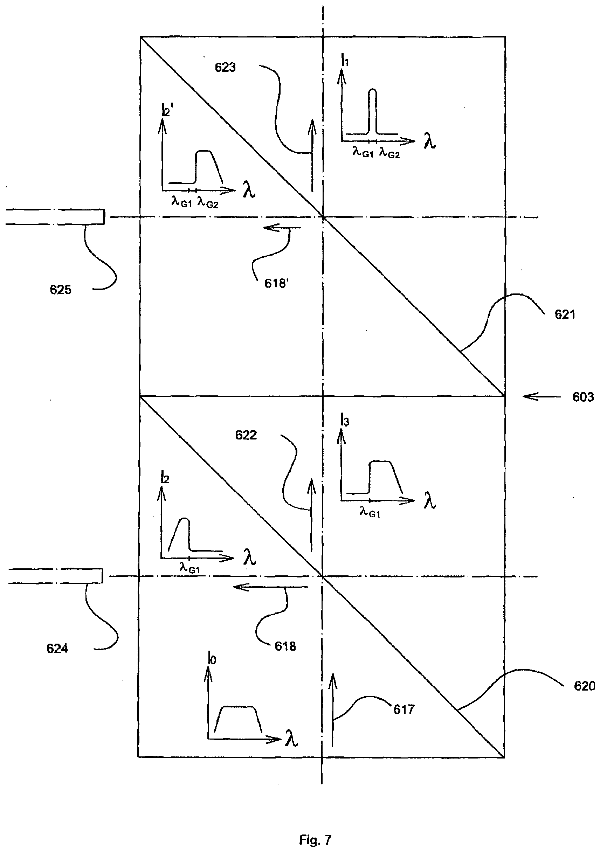

Eine alternative Ausführung des Teilers 603 ist in der Figur 7 dargestellt. Hierbei handelt es sich um einen kaskadierten Teiler mit zwei Teilerschichten, insbesondere Dichroiden 620 und 621. Der erste Dichroid 620 weist die Grenzwellenlänge λ_{G1} und der zweite Dichroid 621 weist die höhere Grenzwellenlänge λ_{G2} auf. Hierdurch reflektiert der erste Dichroid 620 den Wellenlängenbereich unterhalb λ_{G1} in Richtung 618 des zweiten Strahlengangs und lässt spektrale Anteile oberhalb λ_{G1} in Richtung 622 zu dem zweiten Dichroid 621 durch. Am Dichroid 621 werden die verbleibenden spektralen Anteile I₃ des Strahls 622 erneut aufgeteilt, und zwar in den Bereich oberhalb λ_{G2} entsprechend der Intensität I₂ in Richtung des Pfeiles 618 in den zweiten Strahlengang und den Anteil I₁ zwischen den beiden Grenzwellenlängen λ_{G1} und λ_{G2} in Richtung des Pfeiles 623 in den ersten Strahlengang in Richtung des Bildsensors 610. Der spektrale Bereich 618 wird beispielsweise von einer Faser 624 aufgenommen und der spektrale Bereich 618' von einer zweiten optischen Faser 625, wobei diese in Richtung des Spektrometers 613 im zweiten Strahlengang des chromatischen Sensors geleitet und vorzugsweise mittels eines Faserkopplers vereinigt werden.

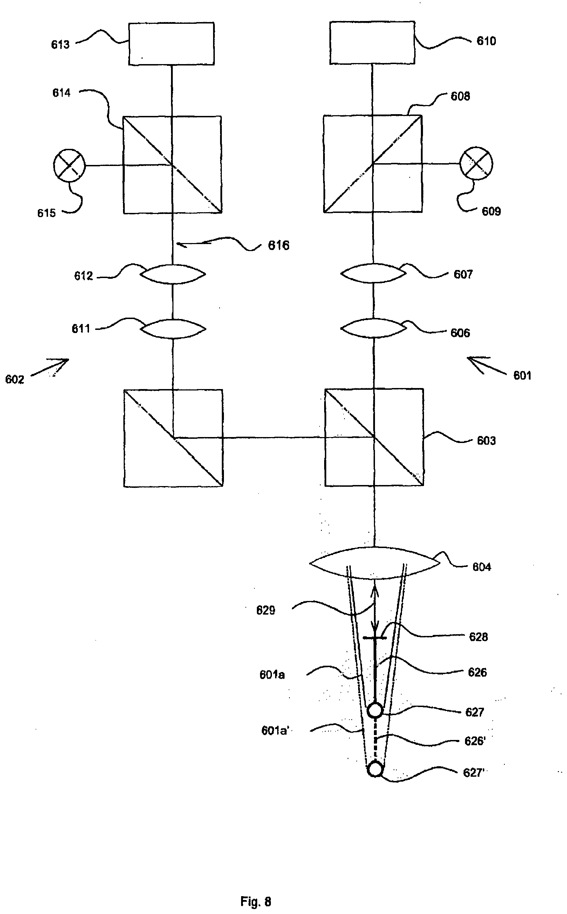

In Fig. 8 ist in Erweiterung zu der Darstellung der Figur 5 werkstückseitig vor der Frontoptik 604 ein biegeelastischer Taststift 626, beispielsweise an einer nicht dargestellten Wechselschnittstelle mit dem optischen Strahlengang 601 automatisch auswechselbar verbunden, angeordnet. Von dem Taststift 626 geht das Antastformelement 627 aus, dass zur berührenden Messung mit dem Werkstück vorgesehen ist. Die Auslenkung senkrecht zur Achse des Taststiftes 626, also senkrecht zur optischen Achse des Strahlengangs 601 wird mittels des ersten Strahlengangs, also des Bildverarbeitungssensors 610 erfasst, dargestellt durch beispielhafte Strahlen 601a des ersten Strahlengangs. Anstatt der direkten Erfassung des Antastformelements 627 kann an dem Taststift in Richtung auf die Frontoptik 604 zu, also oberhalb des Antastformelementes 627 auch eine hier als zweite Marke bezeichnete, jedoch nicht dargestellte Marke, durch den Bildverarbeitungssensor erfasst werden. Des Weiteren geht von dem Taststift 626 die erste Marke 628 aus, welche beispielsweise als Beschichtung des als Faser ausgeführten Taststiftes 626 oder beispielsweise auch als aufgeklebter Spiegel bzw. Teilspiegel ausgeführt ist, wobei ein Teilspiegel ein Teil des Lichtes passieren lässt, um eine Beleuchtung des Antastformelementes 627 oder der zweiten Marke zu ermöglichen und ein Teil des Lichtes reflektiert, um dieses für eine Messung zur Verfügung zu stellen. Erfindungsgemäß ist vorgesehen, dass die zweite Marke 628 dazu dient, dass die Messstrahlung 629 des zweiten Strahlengangs, insbesondere eines Abstandssensors zumindest teilweise reflektiert wird, um die Auslenkung des Antastformelements 627 in Richtung der Taststiftachse zu messen. Der Strahlengang des zweiten Sensors 602 wird dabei durch den Teiler 603 in Richtung 629 auf die am oberen Ende des Taststift angebrachte erste Marke 628 umgelenkt und durch die Frontoptik 604 auf die Marke 628 fokussiert. Gestrichelt dargestellt ist ein wahlweise anstatt des Taststift 626 einbringbarer Taststift 626', welcher das Antastformelement 627' aufweist und beispielhaft die zweite Marke an derselben Stelle 628 aufweist. Damit das Antastformelement 627' bzw. einediesem zugeordnete zweite Marke durch den Bildverarbeitungsstrahlengang 601 auf den Detektor 610 abgebildet werden kann, ist es notwendig, den Arbeitsabstand zumindest durch Bewegen der Linsengruppen 606 und 607 oder einer der beiden Linsengruppen 606 und 607 so anzupassen, dass die beispielhaft mit dem Bezugszeichen 601a' dargestellten Strahlen das Antastformelement 627' erfassen. In der dargestellten beispielhaften Darstellung muss der Arbeitsabstand des zweiten Strahlengangs, also des Abstandssensors 602 gleich bleiben, um die Marke 628 zu erfassen. Erfindungsgemäß ist jedoch auch vorgesehen, dass die Position der Marke 628, für die zweite Taststiftkonfiguration, also Marke 628' an einer in Richtung der Taststiftachse versetzten Position angeordnet ist, und somit auch der Arbeitsabstand des zweiten Sensors 602 durch Bewegen der Linsengruppen 611 und/oder 612 einstellbar sein muss. Ist dies jedoch nicht vorgesehen, so kann die Verstellbarkeit der Linsengruppen 611 und 612 ggf. entfallen bzw. sind entsprechende Linsengruppen nicht vorzusehen. Ersatzweise kann jedoch eine weitere Linse oder Linsengruppe anstelle der Linsengruppen 611 und 612 zur Einstellung eines festen Arbeitsabstandes auf die Marke 628 vorgesehen sein.

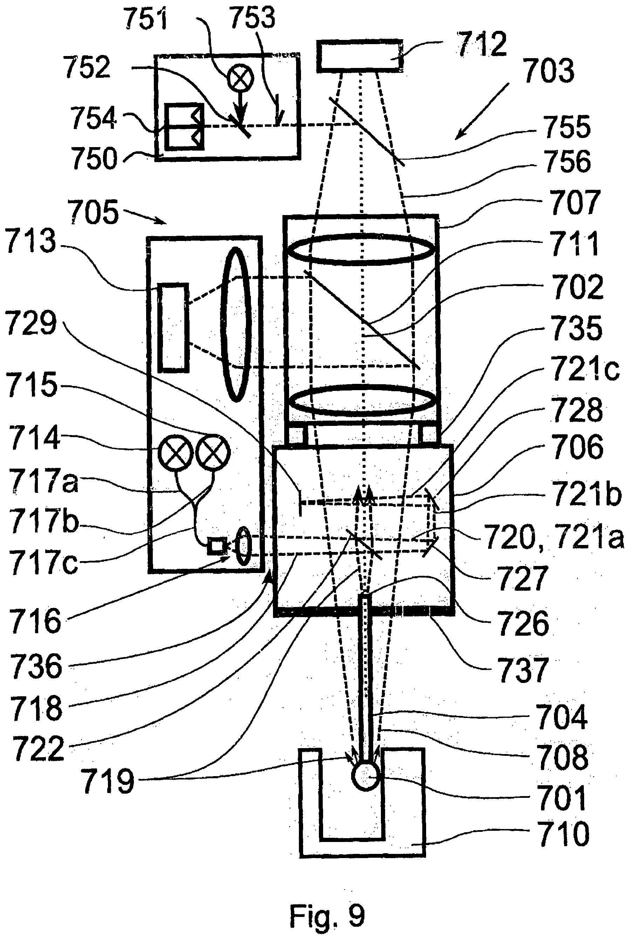

Die Figur 9 zeigt eine weitere Prinzipdarstellung einer erfindungsgemäßen Vorrichtung, insbesondere einen taktil-optischen Sensor, mit einem ersten optischen, interferometrischen Abstandsensor 705 und einem zweiten optischen Abstandsensor 750 zur Erfassung von Marken 701, 726, die von einer Tasterverlängerung 704 ausgehen.

Die Messungen an dem Werkstück 710 werden dabei durch Antastung mit einem Antastformelement 701 durchgeführt, welches bei Berührung mit dem Werkstück 710 ausgelenkt wird und von einer Tasterverlängerung, insbesondere biegeelastischen Tasterverlängerung 704 ausgeht. Die Auslenkung bzw. Position des Antastformelementes 701 oder alternativ einer darüber angeordneten, nicht dargestellten Marke, wie beispielsweise kugelförmige Verdickung der Tasterverlängerung 704 (beide als erste Marke bezeichnet) wird in den beiden lateralen Richtungen (X- und Y-Richtung, rechtwinklig zur optischen Achse 702 des Bildverarbeitungssensors 703) mit dem Bildverarbeitungssensor 703, aufweisend die Kamera 712, erfasst, wie dies hinreichend im Stand der Technik beschrieben ist. In der vertikalen Richtung (Z-Richtung) erfolgen gleichzeitig mit zwei optischen Abstandsensoren 705 und 750 Messungen, die erfindungsgemäß kombiniert werden, um dem Messergebnis des ersten Abstandsensors 705 einen Eindeutigkeitsbereich zuzuordnen.

Der erste optische Abstandsensor 705 ist als Interferometer ausgeprägt und erfasst die erste Marke 701 (Antastformelement oder darüber befindliche erste Marke), hier das Antastformelement 701. Der zweite optische Abstandsensor 750 ist als Foucault-Sensor ausgeprägt und erfasst die am oberen Ende der Tastverlängerung 704 angeordnete zweite Marke 726, die beispielsweise als Spiegel, insbesondere teildurchlässiger Spiegel, oder Dichroit ausgebildet ist, um neben der Reflexion des Messstrahls des zweiten Abstandsensors, der nach dem Einspiegeln mittels optischen Teiler wie Teilerspiegel 755 in den Strahlengang 756, 708 des Bildverarbeitungssensors 703 entlang dessen optischer Achse 702 verläuft, zumindest teildurchlässig für Licht in die vorzugsweise als Lichtleitfaser ausgebildete Tasterverlängerung 704 zur Beleuchtung (Selbstleuchten) des Antastformelementes 701 oder der ersten Marke für die Erfassung mit dem Bildverarbeitungssensor 703 zu sein. Der zweite optische Abstandsensor 750 weist eine Lichtquelle 751 zur Generierung eines Messstrahls, den optischen Teiler 752, die Schneide 753 und die Differenzdiodenanordnung 754 zur Auswertung des an der zweiten Marke 726 reflektierten und in den zweiten optischen Abstandsensor 750 mittels des optischen Teilers 755 zurück umgelenkten Messstrahls auf. Es sind aber auch andere optische Abstandsensoren als der zweite optische Abstandsensor vorgesehen.

Auch zum taktil-optischen Sensor gehört bevorzugt eine Abbildungsoptik 707, die zumeist aus mehreren Linsen besteht und auch als Zoomoptik, gegebenenfalls mit unabhängig von der Zoomstufe einstellbarem Arbeitsabstand, ausgebildet sein kann, um zumindest einen Strahlengang 756, 708 entlang der optischen Achse 702 zu bilden, der auf das Antastformelement 701 oder eine diesem zugeordnete erste Marke fokussiert ist. Die optische Achse 702, die Abbildungsoptik 707 und der Strahlengang 708, 756 sind zunächst dem lateral messenden optischen Sensor 703 zugeordnet, werden aber folgend zumindest teilweise auch für den ersten, interferometrischen Abstandsensor 705 und den zweiten optischen Abstandsensor 750 verwendet.

Wie bereits ausführlich dem Stand der Technik zu entnehmen, kann der Schattenwurf des Antastformelements 701 oder der ersten Marke bei Durchlichtbeleuchtung oder das selbst leuchtende Antastformelement 701 oder die selbst leuchtende erste Marke durch den Bildverarbeitungssensor 703 erfasst werden. Bevorzugt wird im Rahmen dieser Anmeldung die zweite Variante, auch als Eigenleuchten bezeichnet, verwendet. Dieses Eigenleuchten wird erzeugt, indem Licht an der vom Werkstück 710 abgewandten Seite 726 der Tasterverlängerung 704, also tasterverlängerungsseitig auf der in Bezug auf das Antastelement fernliegenden oder abgewandten Seite, in diese eingekoppelt und innerhalb dieser bis zum Antastformelement 701 oder, sofern vorhanden, der ersten Marke, weitergeleitet wird. Die Tastverlängerung 704 ist dazu als zumindest teilweise Licht leitend (Lichtleitfaser) ausgebildet, beispielsweise als Glas- oder Kunststofffaser. Antastformelement 701 bzw. erste Marke sind durch nach dein Stand der Technik bekannte Beschichtung so ausgebildet, dass sie das zugeführte Licht größtenteils abgeben, welches von der Abbildungsoptik 707 erfasst und in Richtung der Auswerteeinheiten wie Kamera 712 und Empfänger 713 der Sensoren 703 und 705 abgebildet wird. Die Strahlengänge beider Sensoren verlaufen dazu bis zu einem optischen Teiler 711 gemeinsam und werden von diesem einerseits in Richtung der Auswerteeinheit 712 des lateral messenden Sensors (Bildverarbeitungssensors) 703 und andererseits in Richtung der Auswerteeinheit 713 des ersten optischen, interferometrischen, Abstandsensors 705 geleitet. Der optische Teiler 711 ist beispielsweise als Teilerspiegel wie halbdurchlässige Folie (Pellicle) oder als Teilerwürfel ausgeprägt. Die Auswerteeinheiten 712, 713 sind beispielsweise Kameras mit vorzugsweise flächiger Empfängerfläche, wie CCD- oder CMOS-Kameras und haben gegebenenfalls zusätzliche Abbildungslinsen vorgeschaltet. Das zum Eigenleuchten in die Tasterverlängerung eingekoppelte Licht kann durch den Messstrahl 719 des ersten, interferometrischen Abstandsensors 705 und/oder den Messstrahl des zweiten optischen Abstandsensors 750 und/oder durch eine nicht dargestellte, separate Lichtquelle, deren Licht durch einen weiteren, ebenfalls nicht dargestellten, optischen Teiler in den Strahlengang 756 eingespiegelt wird, gebildet werden.

Zum vertikal messenden iriterferometrischen, ersten optischen Abstandsensor 705 gehören neben der Abbildungsoptik 707 und der Auswerteeinheiten 713, unter anderem auch die Lichtquellen 714 und 715, die Lichtwellenleiter 717a, 717b und 717c und eine Einkoppclanordnung 716. Letztere besteht zumeist aus einem Faserende mit vorgesetzter Strahlforrnoptik und koppelt die Strahlung 718 der Lichtquellen 714 und 715 aus dem Lichtwellenleiter 717c so aus, dass eine Einkopplung in die Tasterverlängerung 704 ermöglicht wird. Das Licht der beiden Lichtquellen 714 und 715 wird durch einen Y-Koppler, der die Lichtwellenleiter 717a und 717b mit dem Lichtwellenleiter 717c verbindet, vereint. Die Lichtquellen 714 und 715, die Lichtwellenleiter 717a, 717b und 717c und die Einkoppelanordnung 716 können alternativ auch direkt in der Einheit 706 angeordnet werden. In einer alternativen Ausführung zur Ausführung als Heterodyninterferometer mit zwei Lichtquellen 714 und 715 unterschiedlichen Spektrums insbesondere unterschiedlicher schmalbandiger Wellenlängen, ist auch die Ausführung als Homodyninterferometer vorgesehen, wobei nur eine Lichtquelle 714 schmalbandiges Licht abgibt, das mittels Lichtwellenleiter 717a und der Einkoppelanordnung 716 eingekoppelt wird.

Die vorzugsweise austauschbare bzw. wechselbare Einheit 706 beinhaltet unter anderem die Tasterverlängerung 704, Mittel 737 zur Befestigung der Tasterverlängerung 704, Mittel 722 zur Teilung der Strahlung 718 in die Messstrahlung 719 und die Referenzstrahlung 720, Mittel 722 zur Umlenkung der Messstrahlung 719 in Richtung der vom Werkstück 710 abgewandten Seite 726 der Tasterverlängerung 704 und Mittel 727, 728, 729 wie Reflektoren zur Bildung eines Referenzstrahlengangs 721a, 721b, 721c, wobei der Referenzstrahlengang dabei teilweise geneigt verläuft, insbesondere rechtwinklig, zur optischen Achse (Abschnitte 721a, 721c) und teilweise parallel zur optischen Achse (Abschnitt 721b) verläuft, also mehrfach gefaltet (umgelenkt) ist. Die Reflektoren 727, 728 und 729 befinden sich dabei außerhalb des Strahlengangs 708, insbesondere also seitlich neben dem optischen Strahlengang 708.

Die Einheit 706 enthält zudem nicht dargestellte Mittel wie beispielsweise Permanentmagnete, um an einer Wechselschnittstelle 735 lösbar befestigt zu werden. Die Einkopplung der Strahlung 718 erfolgt bevorzugt seitlich zur Einheit 706 an einer als beispielsweise Öffnung ausgebildeten Schnittstelle 736, kann aber ebenso auch innerhalb der Wechselschnittstelle 735 erfolgen. Gegebenenfalls ist dann eine zusätzliche Umlenkung der Strahlung 718 erforderlich. Sofern die Lichtquellen 714 und 715, die Lichtwellenleiter 717a, 717b und 717c und die Einkoppelanordnung 716 direkt in der Einheit 706 angeordnet sind, werden über die Wechselschnittstelle 735 die benötigten elektrischen Zuführungen zu den Lichtquellen 714 und 715 geführt.

Die aus dem Antastformelement austretende Messstrahlung 719 wird von der Abbildungsoptik 707 erfasst und mittels des optischen Teilers 711 zur Auswerteeinheit 713 umgelenkt. Hierbei erfolgt die Überlagerung (Interferenz) mit dem nach Reflexion an den Umlenkspiegeln 727, 728, 729, erneut 728, erneut 727 und dem Teiler 722 in der gleichen Richtung verlaufendem Referenzstrahlengang 720.

Soll im Gegensatz zum in Bezug auf Figur 9 bis hierher beschriebenen taktil-optischen Messmodus, in den zuvor erwähnten ersten oder zweitem Messmodus Messpunkte (Oberflächenpunkte) auf der Oberfläche des Werkstücks 710 direkt mit den beiden optischen Abstandsensoren 705, 750 gemeinsam (erster Messmodus) oder separat (zweiter Messmodus) erfasst und gemessen werden, so wird erfindungsgemäß die Tasterverlängerung 704 entfernt, vorzugsweise automatisch in einer Parkstation abgelegt, indem die gesamte Einheit 706 entfernt und vorzugsweise automatisch in einer Parkstation abgelegt wird. Bei der hier dargestellten Strahlrichtung der Strahlung 718 muss anstelle der Einheit 706 zumindest für die Messung mit dem ersten optischen Abstandsensor 705 eine nicht dargestellte Einheit 706a angeordnet werden, die den optischen Teiler 722 und die Umlenkeinrichtungen 727, 728 und 729 enthält. Erfindungsgemäß sind für den ersten optischen Abstandsensor jedoch auch solche vorgesehen, bei denen der Referenzstrahlengang außerhalb der Einheit 706 geführt ist, wodurch lediglich der optische Teiler 722 in der Einheit 706a vorgesehen ist, oder solche, bei denen zusätzlich die Strahlrichtung der Strahlung 718 bereits außerhalb der Einheit 706 in Richtung der optischen Achse 702 verläuft, wodurch eine Einheit 706a nicht benötigt wird.

## Patentansprüche

1. Koordinatenmessgerät (13) zur geometrischen Bestimmung von Merkmalen, insbesondere Oberflächenmesspunkten, an einem Werkstück (605), umfassend einen Bildverarbeitungssensor als ersten Sensor (610) mit einem Bildverarbeitungsstrahlengang (erster Strahlengang) (601), wobei der erste Strahlengang zumindest eine Frontoptik (604) umfasst, welche dem zu messenden Werkstück zugewandt ist und als Asphäre ausgebildet ist und/oder einen chromatischen Längsfehler aufweist, und wobei auf der vom Werkstück abgewandten Seite der Frontoptik mindestens ein wellenlängenselektiver Teilen (603), angeordnet ist, durch den ein zweiter Strahlengang (602) mit dem Bildverarbeitungsstrahlengang gekoppelt und ein gemeinsamer Strahlengang gebildet wird, indem die Frontoptik aus Richtung des zu messenden Werkstücks durchlaufendes Licht zumindest teilweise aus dem gemeinsamen Strahlengang in den zweiten Strahlengang ausgekoppelt wird, wobei der zweite Strahlengang einem chromatischen Abstandsensor als zweiten Sensör (613) zugeordnet ist, wobei der Bildverarbeitungssensor und der zweite Sensor zur direkten Messung der Werkstückoberfläche (9) und/oder zur Bestimmung der Auslenkung einer oder jeweils einer einem biegeelastischen Taststift (626) zugeordneten Marke (628) ausgebildet sind,
**dadurch gekennzeichnet,**
**dass** der wellenlängenselektive Teiler (603) gesamtes Spektrum des Lichts in den zweiten Strahlengang leitet und dem ersten Sensor (610) ein schmaler Bereich des Spektrums zugeführt wird.

2. Koordinatenmessgerät nach Anspruch 1,
**dadurch gekennzeichnet,**
**dass** der Bildverarbeitungssensor (610) einen Bildsensor wie CCD oder CMOS-Kamera aufweist und im ersten Strahlengang (601) zwischen dem Bildsensor und dem Teiler und/oder zwischen der Frontoptik (604) und dem Teiler (603) mindestens zwei separat verschiebbare Linsen (606,607) oder Linsengruppen zur unabhängigen Einstellung von Arbeitsabstand und Abbildungsmaßstab angeordnet sind.

3. Koordinatenmessgerät nach Anspruch 1 oder 2,
**dadurch gekennzeichnet,**
**dass** die Asphäre eine ausgeprägte chromatische Aberration (chromatischer Längsfehler) aufweist und im zweiten Strählengang (602) ein wellenlängenempfindlicher Detektor wie Spektrometer angeordnet ist, und wobei der wellenlängenseleklive Teiler derart ausgeführt ist, dass aus dem Spektrum des aus Richtung des Werkstücks (605) auf den Teiler (603) treffenden Lichtes lediglich ein begrenzter Wellenlängenbereich in Richtung des Bildverarbeitungssensors (610) des Bildverarbeitungsstrahlengangs (601) geleitet wird,
- indem ein Teiler so ausgeführt ist, dass dieser den begrenzten Wellenlängenbereich oberhalb einer oberen Grenzwellenlänge reflektiert oder durchlässt, wobei die obere Grenzwellenlänge bevorzugt größer als etwa 600 Nanometer ist, wodurch im wesentlichen rotes Licht in Richtung des Bildsensors gelangt, wobei der Teiler bevorzugt ein Dichroid ist, oder
- indem ein Teiler so ausgeführt ist, dass dieser einen begrenzten Wellenlängenbereich unterhalb einer unteren Grenzwellenlänge reflektiert oder durchlässt, wobei die untere Grenzwellenlänge bevorzugt kleiner als etwa 500 Nanometer ist, wodurch im wesentlichen blaues Licht in Richtung des Bildsensors gelangt, wobei der Teiler bevorzugt ein Dichroid ist, oder
- indem ein Teiler als Bandpass oder Bandsperre ausgeführt ist, so dass dieser den begrenzten Wellenlängenbereich oberhalb einer unteren Grenzwellenlänge und unterhalb einer oberen Grenzwellenlänge reflektiert oder durchlässt, wobei der Wellenlängenbereich vorzugsweise nahezu einfarbig ist, bevorzugt eine spektrale Breite von maximal 100 Nanometer, besonders bevorzugt maximal 50 Nanometer aufweist, wobei der Teiler bevorzugt zumindest einen Interferenzfilter umfasst.

4. KoordinatenmesSgerät nach zumindest einem der vorhergehenden Ansprüche 1 bis 3,
**dadurch gekennzeichnet,**
**dass** zwischen dem zumindest einen wellenlängenselektiven Teiler (603) und der Frontoptik (604) ein neutraler Teiler zur Kopplung des zweiten Strahlengangs (602) angeordnet ist, wobei der zweite Strahlengang vorzugsweise breitbandige Lichtquelle umfasst, deren Licht in Richtung des Werkstücks (605) einkoppelt wird, und besonders bevorzugt der wellenlängenselektive Teiler ein Dichroid oder Farbfilter ist.

5. Koordinatenmessgerät nach zumindest einem der vorhergehenden Ansprüche 1 bis 4,
**dadurch gekennzeichnet,**
**dass** zur Beleuchtung des zumindest von der Frontoptik erfassten Bereichs des Werkstücks (605) oder Taststifts (626) zumindest eine breitbandige Lichtquelle (604, 615) und Mittel zum Einkoppeln in den ersten und/oder zweiten Strahlengang (601,602) vorhanden sind, und vorzugsweise zumindest eine weitere Lichtquelle und Mittel zum Einkoppeln in den ersten und/oder zweiten Strahlengang vorhanden sind, wobei der spektrale Anteil der weiteren Lichtquelle sich weitestgehend mit dem begrenzten Wellenlängenbereich überdeckt, der vom wellenlängenselektiv Teiler in Richtung des Bildsensors geleitet wird.

6. Koordinatenmessgerät nach zumindest einem der vorhergehenden Ansprüche 1 bis 5,
**dadurch gekennzeichnet,**
**dass** die Asphäre eine ausgeprägte chromatische Aberration (chromatischer Längsfehler) aufweist und im zweiten Strahlengang (602) ein wellenlängenempfindlicher Detektor wie Spektrometer angeordnet ist, und wobei im gemeinsamen Strahlengang nacheinander zwei wellenlängenselektive Teiler (620, 621), bevorzugt Dichroide angeordnet sind, die das Spektrum des aus Richtung des Werkstücks (605) auf die Teiler treffenden Lichtes jeweils an einer Grenzwellenlänge trennen, also oberhalb dieser reflektieren und unterhalb dieser durchlassen oder umgekehrt, wobei die beiden Teiler unterschiedliche Grenzwellenlängen besitzen, bevorzugt Differenz der Grenzwellenlängen kleiner 100 Nanometer, besonders bevorzugt kleiner 50 Nanometer ist, und dass der spektrale Bereich zwischen den Grenzwellenlängen in Richtung des Bildverarbeitungssensor (610) und der verbleibende spektrale Bereich in Richtung des wellenlängenempfindlichen Detektors (613) geleitet wird.

7. Koordinatenmessgerät nach Anspruch 6,
**dadurch gekennzeichnet,**
**dass** das Licht der beiden nicht in Richtung des Bildverarbeitungssensors (610) geleiteten spektralen Bereiche
- in unterschiedliche Lichtleitfasern eingekoppelt wird, wobei jede Lichtleitfaser zu einem separaten wellenlängenempfindlichen Detektor führt oder Lichtleitfasern gekoppelt und auf einen wellenlängenempfindlichen Detektor geführt werden, oder
- durch Einstellung der Neigung der Dichroide, wobei das jeweilige Licht am Dichroid reflektiertes Licht ist, und/oder durch Umlenkspiegel und/oder Optik auf weitestgehend selben Bereich eines wellenlängenempfindlichen Detektors gelenkt oder in eine zu einem wellenlängenempfindlichen Detektor führende Lichtleitfaser eingekoppelt wird.

8. Koordinatenmessgerät nach zumindest einem der vorhergehenden Ansprüche 1 bis 7,
**dadurch gekennzeichnet,**
**dass** erster und zweiter Strahlengang (601, 602) und damit erster und zweiter Sensor (610, 613) zueinander verschiedene Arbeitsabstände in Bezug auf die Frontoptik (604) aufweisen, wobei Arbeitsabstand des Bildverarbeitungssensors unabhängig von Arbeitsabstand des zweiten Sensors einstellbar ist, wobei insbesondere der zweite Strahlengang (602) zumindest eine Linse oder Linsengruppe (601, 612) enthält, durch die ein im Vergleich zum Strahlengang des Bildverarbeitungssensors abweichender, insbesondere kürzerer Arbeitsabstand realisiert wird.

9. Koordinatenmessgerät nach zumindest einem der vorhergehenden Ansprüche 1 bis 8,
**dadurch gekennzeichnet,**
**dass** der zweite Strahlengang (602) zumindest zwei separat verschiebbare Linsen (601, 602) oder Linsengruppen zur unabhängigen Einstellung von Arbeitsabstand und Abbildungsmaßstab umfasst, wobei Linsen oder Linsengruppen (607, 608) des zweiten Strahlengangs (601) unabhängig von Linsen oder Linsengruppen des ersten Strahlengangs bewegbar sind oder zumindest eine Linse oder Linsengruppe des ersten Strahlengangs mit zumindest einer Linse oder Linsengruppe des zweiten Strahlengangs gemeinsam bewegbar ist, besonders bevorzugt jeweils eine Linse oder Linsengruppe des ersten mit einer Linse oder Linsengruppe des zweiten Strahlengangs gemeinsam bewegbar ist.

10. Koordinatenmessgerät nach zumindest einem der vorhergehenden Ansprüche 1 bis 9,
**dadurch gekennzeichnet,**
**dass** vor der Frontoptik (604) ein biegeelastischer Taststift (626) mit zumindest einem Antastformelement (627) zur Berührung des Werkstücks (605) angeordnet ist oder anordenbar ist, wobei der Taststift zumindest eine dem Taststift bzw. Antastformelement zugeordnete vorzugsweise am oberen Ende des Taststifts angebrachte, erste Marke (628) aufweist, die durch den zweiten Strahlengang (602) des optischen Abstandssensors (613) erfasst wird, und wobei der Taststift vorzugsweise eine dem Taststift bzw. Antastformelement zugeordnete am Taststift oberhalb des Antastformelements angeordnete zweite Marke aufweist, wobei das Antastformelement oder die zweite Marke durch den Strahlengang des Bildverarbeitungssensors (610) erfasst wird und wobei erster und zweiter Sensor zueinander verschiedene Arbeitsabstände in Bezug auf die Frontoptik (604) aufweisen.

11. Verfahren zur geometrischen Bestimmung von Merkmalen, insbesondere Oberflächenmesspunkten, an einem Werkstück (605) unter Verwendung des Koordinatenmessgeräts nach zumindest Anspruch 1,
**dadurch gekennzeichnet,**
**dass** wahlweise mit dem Bildverarbeitungssensor (610) oder dem chromatischen Abstandsensor (613) Messpunkte direkt auf der Oberfläche des Werkstücks (605) aufgenommen werden, wobei mittels zumindest einem wellenlängenselektiven Teiler (603) Bildsensor des Bildverarbeitungssensor lediglich schmalbandiger Spektralbereich, und zwar maximal 100 Nanometer breiter, besonders bevorzugt maximal 50 Nanometer breiter Bereich, beispielsweise blauer Bereich zwischen etwa 450 und 500 Nanometem, des vom Werkstück reflektierten Lichtes zur Auswertung zugeführt wird, und mittels wellenlängenselektivem oder neutralem Teiler dem chromatischen Abstandsensor breitbandiger Spektralbereich oder mehrere Spektralbereiche des vom Werkstück reflektierten Lichtes zur Auswertung zugeführt werden.

12. Verfahren zur geometrischen Bestimmung von Merkmalen, insbesondere Oberflächenmesspunkteh, an einem Werkstück (605) unter Verwendung des Koordinatenmessgeräts nach zumindest Anspruch 10,
**dadurch gekennzeichnet,**
**dass** Messpunkte bei Berührung des Antastformelementes (627) mit dem Werkstück (605) aufgenommen werden, wobei unterschiedliche lange Taststifte (626) einsetzbar sind, und der Arbeitsabstand des Bildverarbeitungssensors (613) auf die Länge des jeweils verwendeten Taststifts angepasst wird durch separates Verstellen von zumindest zwei im ersten Strahlengang (601) vorhandener Linsen oder Linsengruppen (606,607), wobei vorzugsweise
- Linsen oder Linsengruppen des ersten Strahlengangs unabhängig von Linsen oder Linsengruppen (611, 612) des zweiten Strahlengangs (602) bewegt werden oder
- zumindest eine Linse oder Linsengruppe des ersten Strahlengangs mit zumindest einer Linse oder Linsengruppe des zweiten Strahlengangs gemeinsam bewegt werden oder
- jeweils eine Linse oder Linsengruppe des ersten mit einer Linse oder Linsengruppe des zweiten Strahlengangs gemeinsam bewegt wird.

## Claims

1. A coordinate measuring machine (13) for determining geometric features, particularly surface measurement points on a workpiece (605), comprising an image processing sensor as a first sensor (610) having an image processing sensor beam path (first beam path) (601), the first beam path comprising at least one front optic (604), facing toward the workpiece to be measured and is implemented as an asphere and/or comprises chromatic longitudinal flaws, and at least a wavelength selecting splitter (603), being disposed on the side of the front optic facing away from the workpiece, through which a second beam path (602) is coupled to the image processing beam path and a common beam path is formed in that light passing through the front optic from the direction of the workpiece to be measured is at least partially coupled out of the common beam path into the second beam path, the second beam path being associated with a chromatic distance sensor as a second sensor, the image processing sensor and the second sensor being implemented for directly measuring the workpiece surface (9) and/or for determining the deflection of a mark (628), or one mark each, associated with a flexurally elastic probe stylus (626),
**characterized in that**
the selective wavelength splitter (603) guides the entire spectrum of the light into the second beam path and a small part of the spectrum into the first sensor (610).

2. The coordinate measuring machine according to Claim 1,
**characterized in that**
the image processing sensor (610) comprises an image sensor such as a CCD or CMOS camera and/or at least two separate displaceable lenses (606, 607) or lens groups are disposed in the first beam path (601) between the front optic (604) and the splitter (603) for independently adjusting the working distance and imaging scale.

3. The coordinate measuring machine according to Claim 1 or 2,
**characterized in that**
the asphere comprises a distinct chromatic aberration (chromatic longitudinal flaw) and a detector sensitive to wavelength such as a spectrometer is disposed in the second beam path (602), and wherein the selective wavelength splitter is realized such that only a limited wavelength range from the spectrum of the light coming from the direction of the workpiece (605) and impinging on the splitter (603) is guided toward the image sensor (610) of the image processing beam path,
- **in that** a splitter is implemented such that said splitter reflects or passes the limited wavelength range above an upper wavelength limit, wherein the upper wavelength limit is preferably greater than approximately 600 nanometers, whereby substantially red light passes toward the image sensor, wherein the splitter is preferably dichroic, or
- **in that** a splitter is implemented such that said splitter reflects or passes a limited wavelength range below a lower wavelength limit, wherein the lower wavelength limit is preferably less than approximately 500 nanometers, whereby substantially blue light passes toward the image sensor, wherein the splitter is preferably dichroic, or
- **in that** a splitter is implemented as a band-pass or band-stop filter, such that said splitter reflects or passes the limited wavelength range above a lower wavelength limit and below an upper wavelength limit, wherein the wavelength range is preferably nearly monochromatic, preferably comprises a spectral width of no greater than 100 nanometers, particularly preferably no greater than 50 nanometers, wherein the splitter preferably comprises at least one interference filter.

4. The coordinate measuring machine according to at least one of the preceding claims 1 through 3,
**characterized in that**
a neutral splitter for coupling the second beam path is disposed between the at least one wavelength-selective splitter (603) and the front optic (604), wherein the second beam path preferably comprises a broadband light source, the light thereof being coupled toward the workpiece (605), and particularly preferably the wavelength-selective splitter is dichroic or is a color filter.

5. The coordinate measuring machine according to at least one of the preceding claims 1 through 4,
**characterized in that**
at least one broadband light source (604, 615) and means for coupling into the first and/or second beam path (601, 602) are present for illuminating the region of the workpiece (605) or probe stylus (626) captured at least by the front optic, and preferably at least one further light source and means for coupling into the first and/or second beam path are present, wherein the spectral portion of the further light source largely overlaps the adjacent wavelength range guided toward the image sensor by the wavelength-selective splitter.

6. The coordinate measuring machine according to at least one of the preceding claims 1 through 5,
**characterized in that**
that the asphere comprises a distinctive chromatic aberration (chromatic longitudinal flaw) and a wavelength-sensitive detector such as a spectrometer is disposed in the second beam path (602), and wherein two wavelength-sensitive splitters (620, 621), preferably dichroic, are disposed one after the other in the common beam path and each split the spectrum of the light impinging on the splitters from the direction of the of the workpiece (605) at a limit wavelength, thus reflecting above said limit and passing below said limit or vice versa, wherein the two splitters have different limit wavelengths, the difference between the limit wavelengths preferably being less than 100 nanometers, particularly preferably below 50 nanometers, and that the spectral range between the limit wavelengths is guided toward the image sensor (610) and the remaining spectral range is guided toward the wavelength-sensitive detector (613).

7. The coordinate measuring machine according to Claim 6,
**characterized in that**
the light of the two spectral ranges not guided toward the image sensor (610)
- is coupled into different optical fibers, wherein each optical fiber leads to a separate wavelength-sensitive detector or optical fibers are coupled and guided to a wavelength-sensitive detector, or
- is deflected by setting the inclination of the dichroic splitter, wherein the corresponding light is light reflected at the dichroic splitter, and/or by a deflecting mirror and/or optic, to largely the same range as a wavelength-sensitive detector or is coupled into an optical fiber leading to a wavelength-sensitive detector.

8. The coordinate measuring machine according to at least one of the preceding claims 1 through 7,
**characterized in that**
the first and second beam path (601, 602) and thus the first and second sensor (610, 613) comprise different working distances relative to the front optic (604), wherein the working distance of the image processing sensor can be set independently of the working distance of the second sensor, wherein preferably
the second beam path (602) comprises at least one lens or lens group (601, 612) by means of which a working distance deviating from, particularly shorter than, the beam path of the image processing sensor is implemented.

9. The coordinate measuring machine according to at least one of the preceding claims 1 through 8,
**characterized in that**
the second beam path (602) comprises at least two separate displaceable lenses (601, 602) or lens groups for independently setting the working distance and imaging scale, wherein lenses or lens groups (607, 608) of the second beam path (601) are displaceable independently of lenses or lens groups of the first beam path or at least one lens or lens group of the first beam path is displaceable together with at least one lens or lens group of the second beam path, particularly preferably one lens or lens group of the first is displaceable together with one lens or lens each of the second beam path.

10. The coordinate measuring machine according to at least one of the preceding claims 1 through 9,
**characterized in that**
a flexurally elastic probe stylus (626) having at least one contact shape element (627) for contacting the workpiece (605) is or can be disposed in front of the front optic, wherein the probe stylus comprises at least one first mark (628) associated with the probe stylus or contact shape element, preferably at the top end of the probe stylus, said mark being captured by the second beam path (602) of the optical distance sensor (613), and wherein the probe stylus preferably comprises a second mark associated with the probe stylus or contact shape element and disposed on the probe stylus above the contact shape element, wherein the contact shape element or the second mark is captured by the beam path of the image processing sensor (610) and wherein the first and second sensor have different working distances with respect to the front optic.

11. A method for determining geometric features, particularly surface measurement points on a workpiece (605) using the coordinate measuring machine at least according to claim 1,
**characterized in that**
measurement points are recorded directly on the surface of the workpiece (605), selectively by means of the image processing sensor (610) or the chromatic distance sensor (613), wherein only a narrow-band spectral range of the light reflected by the workpiece, preferably no greater than 100 nanometers wide, particularly preferably no greater than 50 nanometers wide, for example the blue range between approximately 450 and 500 nanometers, is guided to the image sensor or image processing sensor by means of at least one wavelength-selective splitter (603) for analysis, and a broad-band spectral range or plurality of broad-band spectral ranges of the light reflected by the workpiece is guided to the chromatic distance sensor by means of a wavelength-selective or neutral splitter for analysis.

12. A method for determining geometric features, particularly surface measurement points on a workpiece (605) using the coordinate measuring machine at least according to claim 10,
**characterized in that**
measurement points are recorded when the contact shape element (627) makes contact with the working distance (605), wherein probe styli (626) of different lengths can be used, and the working distance of the image processing sensor (613) is adapted to the length of the particular probe stylus being used by separately adjust at least two lenses or lens groups (606, 607) present in the first beam path (601), wherein preferably
- lenses or lens groups of the first beam path are displaced independently of lenses or lens groups (611, 612) of the second beam path (602), or
- at least one lens or lens group of the first beam path is displaced together with at least one lens or lens group of the second beam path, or
- one lens or lens group each of the first beam path is displaced together with one lens or lens group of the second beam path.

## Revendications

1. Machine de mesure de coordonnées (13) pour une détermination géométrique de caractéristiques, en particulier de points de mesure de surface, sur une pièce (605), comprenant un capteur optique de traitement d'image en tant que premier capteur (610) avec un trajet optique de traitement d'image (premier trajet optique) (601), sachant que le premier trajet optique comprend au moins une optique frontale (604) orientée vers la pièce à mesurer et a la forme d'une asphère et/ou présente une aberration chromatique longitudinale, et sachant qu'au moins un diviseur sélectif en longueur d'onde (603) est disposé sur le côté de l'optique frontale opposé à la pièce à usiner, ledit diviseur permettant le couplage d'un second trajet optique (602) à un trajet optique de traitement d'image et formant un trajet optique commun grâce au découplage au moins partiel de la lumière traversant l'optique frontale en provenance de la direction de la pièce à mesurer du trajet optique commun vers le second trajet optique, sachant que le second trajet optique est affecté à un capteur de distance chromatique en tant que second capteur (613), sachant que le capteur de traitement d'image et le second capteur sont conçus pour une mesure directe de la surface (9) de la pièce et/ou pour la détermination de la déviation d'une marque ou respectivement d'une marque (628) associée à un palpeur élastique en flexion (626),
**caractérisée en ce**
**que** le diviseur sélectif en longueur d'onde (603) dirige tout le spectre de la lumière dans le second trajet optique et qu'une zone étroite du spectre est amenée au premier capteur (610).

2. Machine de mesure de coordonnées selon la revendication 1,
**caractérisée en ce**
**que** le capteur de traitement d'image (610) comprend un capteur d'image tel qu'une caméra CCD ou CMOS et qu'au moins deux lentilles (606, 607) déplaçables séparément ou des groupes de lentilles sont disposées dans le premier trajet optique (601) entre le capteur d'image et le diviseur et/ou entre l'optique frontale (604) et le diviseur (603) pour un réglage indépendant de la distance de travail et de l'échelle de reproduction.

3. Machine de mesure de coordonnées selon la revendication 1 ou 2,
**caractérisée en ce**
**que** l'asphère présente une aberration chromatique prononcée (aberration chromatique longitudinale) et qu'un détecteur sensible à la longueur d'onde tel un spectromètre est disposé dans le second trajet optique (602), et le séparateur sélectif en longueur d'onde étant conçu de telle manière que seule une plage de longueur d'onde limitée du spectre de lumière qui frappe le diviseur (603) depuis la direction de la pièce à usiner (605) dans la direction du capteur de traitement d'image (610) du trajet optique de traitement d'images (601) est guidée,
- un diviseur étant réalisé de telle sorte qu'il réfléchit ou transmet la plage de longueur d'onde limitée au-dessus d'une longueur d'onde de coupure supérieure, sachant que la longueur d'onde de coupure supérieure est de préférence supérieure à environ 600 nanomètres, une lumière principalement rouge arrivant en direction du capteur d'images, le diviseur étant de préférence un dichroïde, ou
- un diviseur étant réalisé de telle sorte qu'il réfléchit ou transmet la plage de longueur d'onde limitée au-dessous d'une longueur d'onde de coupure inférieure, sachant que la longueur d'onde de coupure inférieure est de préférence inférieure à environ 500 nanomètres, une lumière principalement bleue arrivant en direction du capteur d'images, le diviseur étant de préférence un dichroïde, ou
- un diviseur étant réalisé sous la forme d'un passe-bande ou d'un coupe-bande de sorte qu'il réfléchit ou transmet la plage de longueur d'onde limitée au-dessus d'une longueur d'ondes de coupure inférieure et au-dessous d'une longueur d'onde de coupure supérieure, sachant que la plage de longueur d'onde étant de préférence quasiment monochrome, ayant de préférence une largeur spectrale de 100 nanomètres au maximum, de manière particulièrement préférée de 50 nanomètre au maximum, le diviseur comprenant de préférence au moins un filtre d'interférence.

4. Machine de mesure de coordonnées selon au moins l'une des précédentes revendications 1 à 3,
**caractérisée en ce**
**qu'**un diviseur neutre est disposé entre au moins un diviseur sélectif en longueur d'onde (603) et l'optique frontale (604) pour coupler le second trajet optique (602), sachant que le second trajet optique comprend de préférence une source lumineuse à large bande dont la lumière est accouplée en direction de la pièce (605), et de manière particulièrement préférée que le diviseur sélectif en longueur d'onde est un dichroïde ou un filtre couleur.

5. Machine de mesure de coordonnées selon au moins l'une des précédentes revendications 1 à 4,
**caractérisée en ce**
**qu'**il y a au moins une source lumineuse à large bande (604, 615) et des moyens de couplage au premier et/ou au second trajet optique (601,602) pour l'éclairage d'au moins une zone de la pièce (605) ou du palpeur (626) détectée par l'optique frontale, et de préférence au moins une autre source lumineuse et des moyens pour se coupler au premier et/ou au second trajet optique, sachant que la composante spectrale de l'autre source lumineuse chevauche largement la plage de longueur d'onde limitée qui est guidée par le diviseur sélectif en longueur d'onde en direction du capteur d'image R.

6. Machine de mesure de coordonnées selon au moins l'une des précédentes revendications 1 à 5,
**caractérisée en ce**
**que** l'asphère présente une aberration chromatique prononcée (aberration chromatique longitudinale) et qu'un détecteur sensible à la longueur d'onde, tel un spectromètre, est disposé dans le second trajet optique (602) et sachant que deux diviseurs sélectifs en longueur d'onde (620, 621), de préférence dichroïdes, sont disposés successivement dans le trajet optique commun et séparent le spectre de la lumière frappant les diviseurs à partir de la pièce (605) respectivement à une longueur d'onde de coupure, c'est-à-dire qu'ils réfléchissent au-dessus de cette dernière et transmettent au-dessous de cette dernière ou inversement, sachant que les deux diviseurs possèdent différentes longueurs d'onde de coupure, de préférence que la différence des longueurs d'onde de coupure est inférieure à 100 nanomètre, de manière particulièrement préférée inférieure à 50 nanomètres, et que la plage spectrale est guidée entre les longueurs d'onde de coupure dans la direction du capteur de traitement d'image (610) et que la plage spectrale restante est guidée dans la direction du détecteur sensible à la longueur d'onde (613).

7. Machine de mesure de coordonnées selon la revendication 6,
**caractérisée en ce**
**que** la lumière des deux plages spectrales non guidées dans la direction du capteur de traitement d'image (610)
- est couplée en différentes fibres optiques, sachant que chaque fibre optique mène à un détecteur sensible à la longueur d'onde séparé ou que des fibres optiques sont couplées et guidées sur un détecteur sensible à la longueur d'onde, ou
- est guidée en réglant l'inclinaison des dichroïdes, la lumière respective étant de la lumière réfléchie sur le dichroïde, et/ou au moyen d'un miroir de renvoi et/ou d'une optique sur la zone d'un détecteur sensible à la longueur d'onde autant que possible identique ou est couplée à une fibre optique menant à un détecteur sensible à la longueur d'onde.

8. Machine de mesure de coordonnées selon au moins l'une des précédentes revendications 1 à 7,
**caractérisée en ce**
**que** le premier et le second trajets optiques (601, 602) et par conséquent le premier et le second capteurs (610, 613) présentent des distances de travail différentes l'une de l'autre par rapport à l'optique frontale (604), sachant que la distance de travail du capteur de traitement d'image est réglable indépendamment de la distance de travail du second capteur, sachant que tout particulièrement le second trajet optique (602) contient au moins une lentille ou un groupe de lentilles (601, 612) permettant la réalisation, d'une distance de travail qui est différente, en particulier plus courte, du trajet optique du capteur de traitement d'image.

9. Machine de mesure de coordonnées selon au moins l'une des précédentes revendications 1 à 8,
**caractérisée en ce**
**que** le second trajet optique (602) comprend au moins deux lentilles (601, 602) déplaçables séparément ou groupes de lentilles pour un réglage indépendant de la distance de travail et de l'échelle de reproduction, sachant que les lentilles ou les groupes de lentilles (607, 608) du second trajet optique (601) peuvent être déplacés indépendamment des lentilles ou des groupes de lentilles du premier trajet optique ou qu'au moins une lentille ou un groupe de lentilles du premier trajet optique peut être déplacé conjointement avec au moins une lentille ou un groupe de lentilles du second trajet optique, de manière particulièrement préférée que une lentille ou un groupe de lentilles du premier trajet optique soit respectivement déplacé conjointement avec une lentille ou un groupe de lentilles du second trajet optique.

10. Machine de mesure de coordonnées selon au moins l'une des précédentes revendications 1 à 9,
**caractérisée en ce**
**qu'**un palpeur élastique en flexion (626) avec au moins un élément de forme de contact (627) pour entrer en contact avec la pièce (605) est disposé devant l'optique frontale (604) ou peut l'être, sachant que le palpeur présente au moins une première marque (628) affectée au palpeur ou à l'élément de forme de contact et disposée de préférence sur l'extrémité supérieure du palpeur, ladite marque étant détectée par le second trajet optique (602) du capteur de distance optique (613), et sachant que le palpeur présente de préférence une seconde marque affectée au palpeur ou à l'élément de forme de contact et disposée sur le palpeur au-dessus de l'élément de forme de contact, sachant que l'élément de forme de contact ou la seconde marque est détecté(e) par le trajet optique du capteur de traitement d'image (610) et sachant que le premier et le second capteurs présentent des distances de travail différentes l'un de l'autre par rapport à l'optique frontale (604).

11. Procédé de détermination géométrique de caractéristiques, en particulier de points de mesure de surface, sur une pièce (605), en utilisant la machine de mesure de coordonnées selon au moins la revendication 1,
**caractérisé en ce que**
des points de mesure sont enregistrés au choix par le capteur de traitement d'image (610) ou le capteur de distance chromatique (613) directement sur la surface de la pièce (605), sachant qu'à l'aide d'au moins un diviseur sélectif en longueur d'onde (603), seule une plage spectrale à bande étroite de la lumière réfléchie par la pièce, d'une largeur maximale de 100 nanomètres, de manière particulièrement préférée d'une plage d'une largeur maximale de 50 nanomètres, à titre d'exemple une plage bleue entre environ 450 et 500 nanomètres, est affectée au capteur d'image du capteur de traitement d'image pour évaluation et, à l'aide d'un diviseur sélectif en longueur d'onde ou neutre, une plage spectrale à bande large ou plusieurs plages spectrales de la lumière réfléchie par la pièce sont affectées au capteur de distance chromatique pour évaluation.

12. Procédé de détermination géométrique de caractéristiques, en particulier de points de mesure de surface, sur une pièce (605), en utilisant la machine de mesure de coordonnées selon au moins la revendication 10,
**caractérisé en ce**
**que** des points de mesure sont enregistrés lorsque l'élément de forme de contact (627) entre en contact avec la pièce (605), sachant que des palpeurs (626) de différentes longueurs sont utilisables et que la distance de travail du capteur de traitement d'image (613) est adaptée à la longueur du palpeur respectivement utilisé grâce au réglage séparé d'au moins deux lentilles ou groupes de lentilles (606, 607) présents dans le premier trajet optique (601) 607), sachant de préférence que
- les lentilles ou groupes de lentilles du premier trajet optique sont déplacés indépendamment des lentilles ou des groupes de lentilles (611, 612) du second trajet optique (602) ou
- **qu'**au moins une lentille ou un groupe de lentilles du premier trajet optique sont déplacés conjointement avec au moins une lentille ou un groupe de lentilles du second trajet optique ou
- **que** respectivement une lentille ou un groupe de lentilles du premier trajet est déplacé conjointement avec une lentille ou un groupe de lentilles du second trajet optique.
